(19) **Europäisches Patentamt / European Patent Office / Office européen des brevets**

(11) **EP 4 576 650 A1**

(12) **DEMANDE DE BREVET EUROPÉEN**

(43) Date de publication:
**25.06.2025 Bulletin 2025/26**

(21) Numéro de dépôt: **24307191.7**

(22) Date de dépôt: **19.12.2024**

(51) Classification Internationale des Brevets (IPC):
**H04L 9/00** (2022.01)

(52) Classification Coopérative des Brevets (CPC):
**H04L 9/008;** H04L 2209/046

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **21.12.2023 FR 2314913**

(71) Demandeur: **Commissariat à l'Energie Atomique et aux Energies Alternatives
75015 Paris (FR)**

(72) Inventeurs:
- **BOUDGUIGA, Aymen**
  **91191 Gif-sur-Yvette Cedex (FR)**
- **SIRDEY, Renaud**
  **91191 Gif-sur-Yvette Cedex (FR)**
- **STAN, Oana**
  **91191 Gif-sur-Yvette Cedex (FR)**
- **ZUBER, Martin**
  **91191 Gif-sur-Yvette Cedex (FR)**
- **RENARD, Marc**
  **91191 Gif-sur-Yvette Cedex (FR)**

(74) Mandataire: **Brevalex
Tour Trinity
1 B Place de la Défense
92400 Courbevoie (FR)**

(54) **PROCÉDÉ DE TRAITEMENT DE DONNÉES**

(57) Procédé de traitement de données pour obtenir un résultat (x) par une combinaison d'opérations élémentaires (f,g,h ;$g_j$) ; dans lequel

deux chiffrements [Enc1,Dec1 ; Enc2,Dec2] sont définis, l'un indéchiffrable par un serveur, l'autre indéchiffrable par un TEE ; et

S1) un client émetteur (CL1) fournit et chiffre une donnée d'entrée (x) ;

S2) il la transmet sous le chiffrement (Enc1) au serveur ou au TEE ;

S3) par un traitement de données, ces deux calculateurs appliquent la combinaison d'opérations élémentaires à la donnée chiffrée reçue manière à obtenir un chiffré ([F(x)]) du résultat, qu'ils transmettent à un client récepteur (CL1,CL2) ;

S4) ce dernier déchiffre le chiffré du résultat ([F(x)]) et obtient le résultat (F(x)).

Pendant l'étape S3, le serveur ne traite de donnée traitée que sous chiffrement indéchiffrable par le serveur, et le TEE ne traite de donnée traitée que sous chiffrement indéchiffrable par le TEE.

[Fig. 1]

## Description

DOMAINE TECHNIQUE DE L'INVENTION

Le domaine de l'invention est le domaine du traitemnet de données et plus particulièrement, du traitement de données de manière sécurisée.

Plus précisément, l'invention concerne un procédé de traitement de données dans un système comprenant deux calculateurs pour obtenir de manière sécurisée un résultat fonction de données d'entrée fournies par des clients ou utilisateurs du système.

ÉTAT DE LA TECHNIQUE

La présente divulgation s'inscrit dans une tendance considérable ces dernières années en matière de traitement de données, qui est le recours croissant au 'cloud', c'est-à-dire à des architectures en nuage, pour réaliser divers traitements sur des données quelle que soit la nature de ceux-ci.

Cependant, le déport de ces opérations au sein du cloud soulève à son tour naturellement de nouvelles problématiques, en particulier la difficulté d'assurer la confidentialité des données et l'intégrité des opérations réalisées.

Différentes techniques de chiffrement ont été développées pour répondre au besoin de confidentialité des données.

Parmi celles-ci, on distingue notamment les techniques de chiffrement homomorphe. Avantageusement, le chiffrement homomorphe permet que les traitements appliqués aux données soient réalisés sur des données chiffrées. Néanmoins, le chiffrement homomorphe utilise des chiffrés dont la taille est très grande par rapport à celle des données initiales. Cela entraîne un accroissement considérable de la quantité de calculs à réaliser, ce qui naturellement est extrêmement problématique pour la mise en oeuvre de cette technique.

De plus, bien que ces techniques s'avèrent efficaces pour empêcher les atteintes aux données vis-à-vis de tiers, elles peuvent présenter en revanche une efficacité limitée contre certains types d'acteurs, notamment des acteurs privilégiés : administrateur du système, fournisseur de l'infrastructure cloud, ou plus généralement toute personne autorisée à intervenir sur les traitements.

Pour remédier à ces inconvénients, il a été proposé (voir par exemple le document Ref.2 ou 4) de déléguer au moins une partie des traitements de données réalisés sur des chiffrés homomorphes (de tels calculs seront appelés par la suite 'réalisés en mode homomorphe') dans un calculateur secondaire sécurisé de type Environnement d'Exécution Sécurisé, ou « TEE », de l'Anglais 'Trusted Execution Environment'. Un tel type de calculateur est défini notamment par le document Ref.4.

Une telle délégation de calcul avantageusement réduit significativement la quantité de calculs à réaliser.

Cependant, ces méthodes qui combinent le chiffrement homomorphe et la délégation de certains traitements de données à un TEE restent limitées à des applications très spécifiques, par exemple, le partage sécurisé d'une clé, l'apprentissage d'un réseau de neurones avec du chiffrement homomorphe pour des fonctions quadratique et le reste du calcul dans le TEE, une méthode d'agrégation combinant calcul homomorphe et délégation de calcul à un TEE, etc.

De plus, toutes ces solutions se situent dans le contexte d'un TEE auquel par hypothèse il est supposé qu'on peut lui faire confiance. Pour cette raison, ces méthodes ne fournissent pas de mesures de protection contre un TEE « honnête-mais-curieux ». Pour mémoire, dans le domaine de la cryptographie et des protocoles de sécurité, un calculateur "honnête mais curieux" (aussi appelé un adversaire passif ou semi-honnête) est un type d'adversaire qui suit le protocole correctement, mais qui essaie d'apprendre autant que possible à partir des informations disponibles (voir document Ref.4).

Enfin, ces solutions n'assurent pas nécessairement la sécurité des calculs dans le cas où le serveur adopte un comportement malicieux.

EXPOSÉ DE L'INVENTION

La présente invention vise à proposer un procédé de traitement de données permettant d'éviter les risques suggérés ci-dessus.

A cette fin, il est proposé un procédé de traitement de données dans lequel des calculs sont réalisés de manière distribuée sur deux calculateurs, à savoir un serveur et un module matériel de sécurité, ou TEE, le procédé permettant d'assurer la confidentialité des données y compris dans le cas où le serveur adopte un comportement malicieux, alors que le TEE adopte quant à lui un comportement « honnête-mais-curieux ».

À cet effet, selon la présente divulgation, il est proposé un procédé de traitement de données dans un système comprenant deux calculateurs pour obtenir un résultat à partir d'au moins une donnée d'entrée à fournir par au moins un client émetteur, le résultat étant calculable en appliquant une combinaison d'opérations élémentaires à au moins une donnée d'entrée ; dans lequel l'un des calculateurs est un serveur, et l'autre est un environnement d'exécution sécurisé, TEE ; un premier chiffrement et un deuxième chiffrement sont définis, l'un étant indéchiffrable par le serveur, et l'autre étant indéchiffrable par le TEE ; le procédé comporte les étapes suivantes :

S1) au moins un client émetteur fournit une donnée d'entrée et lui applique le premier chiffrement ;
S2) ledit au moins un client émetteur transmet la donnée d'entrée sous le premier chiffrement à un des calculateurs ;
S3) au cours d'un traitement de données, les deux calculateurs appliquent la combinaison d'opérations élémentaires à ladite donnée chiffrée reçue à l'étape S2 de manière à obtenir un chiffré du résultat, et transmettent ce résultat à au moins un client récepteur, l'étape S3 comportant les étapes élémentaires suivantes :

S31) le premier calculateur chiffre la donnée traitée sous deuxième chiffrement
S32) le premier calculateur transmet au deuxième calculateur la donnée traitée obtenue, chiffrée sous premier et deuxième chiffrement ; et
S33) le deuxième calculateur supprime le premier chiffrement de la donnée traitée reçue ;

S4) ledit au moins un client récepteur déchiffre le chiffré du résultat et obtient le résultat ;

pendant le traitement de données effectué à l'étape S3, le serveur ne traite de donnée traitée que sous au moins le chiffrement indéchiffrable par le serveur, et le TEE ne traite de donnée traitée que sous au moins le chiffrement indéchiffrable par le TEE, qui peut être notamment un chiffrement par masquage ; et
le premier et le deuxième chiffrement vérifient la propriété, pour toute donnée traitée x :

$$Dec2(Dec1(Enc2(Enc1(x)))) = Dec2(Enc2(x)).$$

Dans le présent document, l'expression 'donnée sous chiffrement' désigne une donnée qui est chiffrée au moins à l'aide du chiffrement considéré. La donnée peut être éventuellement sous double (voire triple) chiffrement.

Le fait que le chiffrement soit indéchiffrable par le serveur signifie par exemple que le serveur ne dispose pas de la fonction de déchiffrement, ou ne dispose pas de la clé de déchiffrement.

Le fait que le serveur ne traite de donnée traitée que sous au moins le chiffrement indéchiffrable par le serveur signifie que toute donnée traitée transmise au serveur est préalablement chiffrée sous au moins le chiffrement indéchiffrable par le serveur. De même, le fait que le TEE ne traite de donnée traitée que sous au moins le chiffrement indéchiffrable par le TEE signifie que toute donnée traitée transmise au TEE est préalablement chiffrée sous au moins le chiffrement indéchiffrable par le TEE.

Dans certains modes de réalisation, l'un des chiffrements est déchiffrable par le serveur et pas par le TEE, et l'autre des deux chiffrements inversement est déchiffrable par le TEE mais pas par le serveur.

Le TEE est un composant qui a généralement une capacité de mémoire relativement faible. De préférence, la mémoire du TEE a une capacité qui n'excède pas 1 GO, ou préférentiellement qui n'excède pas 512 MO (Méga-octets), et encore plus préférentiellement qui n'excède pas 256 MO. Naturellement, on suppose que le TEE est intègre quant aux traitements qu'il applique aux données traitées.

Dans le procédé, le premier calculateur peut être le serveur et le deuxième calculateur le TEE, ou inversement.

L'étape centrale du procédé défini ci-dessus est l'étape S3. Au cours de cette étape, un traitement est appliqué par les calculateurs à la donnée d'entrée chiffrée reçue à l'étape S2.

Ce traitement comporte un certain nombre d'opérations élémentaires.

Ces opérations élémentaires transforment successivement la donnée d'entrée initiale en différentes données traitées. Le terme 'donnée traitée' désigne une donnée obtenue à partir de la donnée initiale au cours du traitement. Lorsque toutes les opérations élémentaires constituant le traitement ont été réalisées, les calculateurs obtiennent un chiffré du résultat. Celui-ci est alors transmis à un ou plusieurs clients (dits clients récepteurs).

Ainsi au cours du traitement, les calculateurs appliquent la combinaison d'opérations élémentaires à la donnée d'entrée reçue, ce qui leur permet d'obtenir le chiffré du résultat voulu.

De manière importante dans le procédé, à l'étape S3, au lieu d'être exécutées sur des données x en clair, toutes les opérations réalisées lors du traitement sont exécutées sur des données chiffrées [x].

Chacun des calculateurs est donc configuré pour appliquer chacune des opérations du traitement qui lui incombent non pas sur une donnée en clair, mais sur une donnée chiffrée correspondante. Ainsi notamment, si une opération élémentaire consiste à appliquer une fonction f à une donnée traitée x, suivant le procédé l'un des calculateurs en réalité applique une fonction $\tilde{f}$ à la donnée chiffrée [x] de manière à fournir en sortie un résultat chiffré égal au chiffré du résultat, soit [f(x)]. Le calculateur applique donc en fait une fonction $\tilde{f}$ au chiffré [x] de la donnée x, et fournit en sortie le chiffré du résultat : $\tilde{f}([x]) = [f(x)]$. Pour simplifier dans ce qui suit, la fonction $\tilde{f}$ est notée f comme la fonction de laquelle elle est dérivée.

Dans le procédé le plus souvent, de manière connue en soi, les opérations constituant le traitement sont exécutées exclusivement sur des entiers modulo une valeur maximale prédéfinie T.

Dans le procédé, avantageusement les données sont chiffrées pendant la totalité des étapes (ou opérations) effectuées, que celles-ci soient effectuées par le serveur ou par le TEE. Par conséquent, ce procédé permet de réaliser ces étapes de manière sécurisée, non seulement même si le serveur est malicieux, mais aussi si le TEE adopte un comportement « honnête mais curieux ».

Dans le procédé, selon le mode de mise en oeuvre et sauf indication contraire, toute application et toute suppression d'un chiffrement à une donnée peut éventuellement être précédée ou suivie d'une opération élémentaire modifiant la donnée traitée.

Dans le présent document, un chiffrement par masquage inclut toute addition logique permettant de modifier la donnée qui est chiffrée (à l'aide du masque), par exemple une addition, une fonction logique 'OU exclusif' (XOR), etc.

Dans le procédé, tout type de chiffrement indéchiffrable par le serveur peut être utilisé. Le chiffrement indéchiffrable par le serveur peut ainsi être ou peut ainsi comprendre un chiffrement homomorphe, notamment totalement homomorphe.

De préférence, chaque opération sur une donnée traitée réalisée par le serveur est réalisée sous chiffrement homomorphe. Dans ce cas, le serveur ne traite de donnée traitée que sous au moins un chiffrement homomorphe.

Ainsi dans certains modes de mise en oeuvre, le premier chiffrement est un chiffrement homomorphe et le deuxième chiffrement un chiffrement par masquage, ou inversement.

Pour permettre aux calculateurs de réaliser le traitement sur des données chiffrées, le procédé inclut des opérations support au cours desquelles des fonctions support sont appliquées aux données d'entrée, aux données traitées ou aux résultats, chacun étant éventuellement chiffré.

Par 'fonction support', on désigne ici une fonction autre que lesdites opérations élémentaires et qui :

- contribue à l'exécution de calculs homomorphes par le serveur ou à la vérification de ceux-ci ;
- sert à chiffrer ou déchiffrer des données à traiter reçues du client, des données traitées (par les calculateurs), ou des résultats envoyés au client ; et/ou
- sert à préparer des données (données de vérification) servant à vérifier des données à traiter reçues du client, des données traitées, et/ou des résultats envoyés au client.

On comprend que les fonctions support ne participent pas à la réalisation des opérations élémentaires (puisqu'elles sont autres que les opérations élémentaires), mais servent uniquement soit à permettre de réaliser ces opérations élémentaires sur des données chiffrées, soit à chiffrer ou déchiffrer des données fournies aux calculateurs ou envoyées par ceux-ci, soit à vérifier ou assurer que les différentes opérations que comporte le procédé, notamment les opérations élémentaires, ont été convenablement réalisées.

Dans certains modes de mise en oeuvre, à l'étape S3, le TEE applique à la donnée traitée ou aux données traitées uniquement une ou plusieurs fonctions support. Les opérations élémentaires du traitement sont alors quant à elles exclusivement réalisées par le serveur.

Dans certains modes de mise en oeuvre, le procédé comporte les étapes suivantes :

S0235) le deuxième calculateur applique le premier chiffrement à la donnée déchiffrée au cours de l'étape S33, et transmet la donnée obtenue au premier calculateur ; et
S0236) le premier calculateur supprime le deuxième chiffrement de la donnée traitée reçue à l'issue de l'étape S0235.

Ainsi, à partir de la donnée traitée sous deuxième chiffrement disponible dans le serveur à l'étape S33, le serveur peut fournir une donnée traitée sous double chiffrement au premier calculateur. Celui-ci peut retirer le deuxième chiffrement. Si la donnée traitée à ce stade est en fait le chiffré du résultat, le premier calculateur peut alors transmettre ce chiffré du résultat (sous premier chiffrement) au client qui le déchiffre.

De préférence, l'étape S0235 est effectuée immédiatement à l'issue de l'étape S33, de telle sorte que durant l'étape S0235, le deuxième calculateur applique le premier chiffrement à la donnée traitée obtenue en sortie de l'étape S33. Grâce à cela, lorsque le premier chiffrement est un chiffrement homomorphe, les étapes S33 et S0235 permettent de réaliser une réinitialisation du bruit ou une relinéarisation.

Comme les deux étapes S33 et S0235 sont exécutées immédiatement l'une après l'autre, sans opération intermédiaire, elles constituent une opération de déchiffrement/rechiffrement. Ces deux opérations groupées, plus généralement, peuvent constituer également un bootstrapping, une re-linéarisation de LHE ('Levelled Homomorphic Encryption'), ou les deux à la fois, ou toute autre opération de gestion de chiffré ('ciphertext management'). Elles peuvent ainsi être des opérations conduites pour obtenir à nouveau un chiffré ayant le format d'un chiffré 'frais' (« fresh ciphertext »).

Cette dernière opération est effectuée normalement dans le cas où le fait de retirer puis réappliquer le chiffrement permet de diminuer le niveau de bruit dans les chiffrés, ce qui est le cas notamment pour certains chiffrements (premiers chiffrements) homomorphes. Cette opération est effectuée de préférence dans le cas où le deuxième calculateur est un TEE.

Dans ce cas, grâce aux opérations successives de déchiffrement et rechiffrement effectuées par le TEE, lorsqu'il y a une opération de transchiffrement avec un facteur d'expansion élevé, la taille des chiffrés transmis depuis et vers le client peut être drastiquement réduite ce qui résulte en une réduction de consommation de bande passante entre le client et le serveur.

De plus, comme les opérations de maintenance de chiffrés sont ainsi déléguées au TEE, qui les réalise de manière bien moins coûteuse que le serveur, la performance du calcul homomorphe du serveur est considérablement augmentée. Le rechiffrement permet de rafraîchir les chiffrés homomorphes et a un effet équivalent à une opération de bootstrapping mais avec un meilleur niveau de bruit résultant.

Dans certains modes de mise en oeuvre, le procédé est mis en oeuvre de manière itérative lors d'une pluralité de boucles de calcul. L'un des chiffrements peut par ailleurs être un chiffrement par masque. Dans ce cas, pour l'application du chiffrement par masque au cours du procédé, le client ou le calculateur concerné génère un flux de masque ; et à chaque boucle de calcul, un nouveau masque est généré et utilisé pour le masquage.

Dans de nombreux modes de mise en oeuvre, le résultat chiffré retourné au(x) client(s) récepteur(s) à l'issue de l'étape S3 est chiffré sous au moins le premier chiffrement, mais ce n'est pas nécessairement le cas.

Ainsi au contraire dans certains modes de mise en oeuvre du procédé, au cours de l'étape S3, la donnée traitée est chiffrée sous un chiffrement autre que le premier chiffrement ou est chiffrée avec le premier chiffrement mais avec une autre clé de chiffrement ; et le résultat chiffré retourné à l'issue de l'étape S3 est chiffré avec un chiffrement différent du premier chiffrement ou est chiffré avec le premier chiffrement mais avec une autre clé de chiffrement.

Ces modes de mise en oeuvre permettent donc de réaliser une opération de changement de clé (key switching) de manière sécurisée.

Selon les modes de mise en oeuvre, le (ou les) clients récepteurs recevant le résultat chiffré à l'issue de l'étape S3, peut ou peuvent être identique(s) ou différent(s) du ou de chaque dudit au moins un client émetteur fournissant la donnée à l'étape S1.

Dans certains modes de mise en oeuvre, le procédé comporte en outre une étape S0411 précédant l'étape S2 et durant laquelle le premier client applique un chiffrement additionnel, notamment symétrique, à la donnée ; et après que la donnée a été transmise au premier calculateur à l'étape S2, le premier calculateur retire le chiffrement additionnel.

Ce chiffrement additionnel permet la transmission de la donnée initiale, chiffrée, du client au premier calculateur. Le deuxième chiffrement peut ainsi être appliqué par le premier calculateur, et non par le client. Cela réduit d'une part les opérations de calcul effectuées par le client (l'application du chiffrement additionnel, par exemple symétrique, peut être plus simple que l'application du deuxième chiffrement, typiquement homomorphe). De plus, cela ne nécessite pas que le client dispose de la clé de chiffrement du deuxième chiffrement, et réduit les coûts de communication.

Dans certains modes de mise en oeuvre du procédé, lors d'une opération S0533, le TEE retire le premier chiffrement, dit premier chiffrement initial, qui peut être notamment un chiffrement par masquage, de la donnée traitée ; et

- lors d'une opération S0535, le TEE applique à la donnée traitée un chiffrement homomorphe, en tant que premier chiffrement final ;
- lors d'une opération S0535a, à la suite de l'étape S0535, la donnée traitée sous premier chiffrement final et sous deuxième chiffrement est transmise au serveur ; lorsque l'ensemble des opérations élémentaires ont été effectuées, le chiffré du résultat est transmis au client sous premier chiffrement final ; et à l'étape S4, le client retire le premier chiffrement final.

Dans ce mode de mise en oeuvre, le client applique un premier chiffrement initial à la donnée qu'il transmet au premier calculateur. Lors des étapes S0533 et S0535, le premier chiffrement initial va être retiré, puis remplacé par le premier chiffrement final. C'est donc celui-ci qui sera déchiffré par le client à l'étape finale S4. Ce mode de mise en oeuvre permet donc de réaliser un transchiffrement, et notamment, éventuellement, de remplacer un chiffrement par masquage par un chiffrement homomorphe.

Dans ce mode de mise en oeuvre, le TEE est de préférence le premier calculateur.

A l'étape S2, la donnée d'entrée sous premier chiffrement initial est d'abord transmise au serveur.

Après réception de cette donnée, lors d'une étape S0531, le serveur applique à la donnée traitée le deuxième chiffrement, qui est un chiffrement par masquage et la transmet au TEE, chiffrée sous ce deuxième chiffrement.

Après que à la suite de l'étape S0535a, la donnée traitée sous premier chiffrement final et sous deuxième chiffrement a été transmise au serveur, lors d'une étape S0536, le serveur retire le deuxième chiffrement (le chiffrement par masquage). Tout ou partie des opérations élémentaires peuvent être effectuées par le serveur uniquement après réalisation de l'étape S0536.

Dans certains modes de mise en oeuvre du procédé, le premier chiffrement appliqué à l'étape S1 est le chiffrement homomorphe, dit premier chiffrement homomorphe ;

> lors d'une étape S0633, le TEE retire le premier chiffrement homomorphe de la donnée traitée ;
> lors d'une étape S0635 effectuée après l'étape S0633, le TEE applique à la donnée un deuxième chiffrement homomorphe autre que le premier chiffrement homomorphe ; et
> à l'étape S4, le client retire du résultat chiffré le deuxième chiffrement homomorphe.

Ce mode de mise en oeuvre permet de réaliser un transchiffrement, le premier chiffrement homomorphe étant remplacé par le deuxième chiffrement homomorphe par le TEE lors des étapes S33 et S35.

Procédé itératif

Dans certains modes de mise en oeuvre du procédé, la combinaison d'opérations élémentaires comporte N opérations élémentaires d'ordre j, j=1... N ;

> l'étape S3 comporte l'exécution d'une pluralité de boucles de calcul, de manière itérative ;
> à chaque boucle d'indice j, j=1.. N, les étapes S1, S31, S32 et S33, une étape S0730, une étape S0735 et une étape S0736 sont réalisées de la manière suivante :

>> au cours de l'étape S1, le client fournit une donnée d'entrée d'indice j, et transmet ladite donnée d'entrée d'indice j au premier calculateur, qui est le serveur, comme donnée d'entrée pour l'étape S0730 ;
>> au cours de l'étape S0730, le serveur applique l'opération élémentaire d'indice j à la donnée qui lui est fournie en entrée ;
>> le serveur réalise l'étape S31 d'application du deuxième chiffrement à la donnée traitée et l'étape S32 de transmission de la donnée traitée chiffrée au TEE ;
>> le TEE réalise l'étape S33 de suppression du premier chiffrement de la donnée traitée,
>> puis à l'étape S0735 applique à nouveau à la donnée le premier chiffrement, puis retransmet la donnée ainsi rechiffrée au serveur ;
>> à réception de ladite donnée ainsi rechiffrée, le serveur au cours d'une étape S0736a supprime de celle-ci le deuxième chiffrement ; la donnée ainsi modifiée est alors fournie comme donnée d'entrée de l'opération S0730 de la boucle de calcul suivante si celle-ci a lieu.

Par ailleurs, la sécurité du traitement réalisé par les calculateurs peut être augmentée lorsqu'un protocole de calcul vérifiable est connu pour le traitement à réaliser.

On considère plus particulièrement le cas où un protocole de calcul vérifiable est défini, et permet de vérifier le résultat en réalisant une vérification élémentaire pour chacune desdites opérations élémentaires.

On se place dans le cas où le premier calculateur est le serveur, et le deuxième calculateur est le TEE. Une fonction de calcul de tag est définie dans le cadre du protocole de calcul vérifiable, cette fonction étant commutative avec les opérations élémentaires gj (pour la composition de fonctions o).

Le premier calculateur est le serveur, et le deuxième calculateur est le TEE.

Une fonction de calcul de tag est définie dans le cadre du protocole de calcul vérifiable, cette fonction étant commutative avec les opérations élémentaires.

Le procédé comporte alors les étapes suivantes :

> à l'étape S1, le client transmet en outre au serveur un tag du chiffré sous premier chiffrement de la donnée ;
> le deuxième chiffrement est un chiffrement par masque ;
> à chaque boucle d'indice j, j = 1... N :

>> à une étape S0701a, le client fournit au serveur un masque ($m_j$) et un tag de masque du masque ;
>> au cours d'une étape S0730, le serveur applique l'opération élémentaire d'indice j au tag de donnée traitée qui lui est fourni en entrée ;
>> au cours d'une étape S0731, le serveur chiffre sous deuxième chiffrement la donnée traitée ;
>> au cours d'une étape S0732, le serveur transmet au TEE la donnée traitée obtenue, chiffrée sous premier et deuxième chiffrement ;
>> au cours d'une étape S0730a, le serveur applique l'opération élémentaire ($g_j$) d'indice j au tag de donnée qui lui est fourni en entrée ;
>> au cours d'une étape S0731a, le serveur calcule le tag du chiffré sous double chiffrement à partir du tag obtenu à l'étape S0730a et du tag du masque, et transmet ce tag au TEE ;

au cours d'une étape S0732a, en fonction de la donnée chiffrée reçue à l'étape S0732, et du tag de donnée chiffré reçu à l'étape S0731a, le TEE vérifie l'opération élémentaire réalisée à l'étape S0730 en effectuant la vérification élémentaire correspondant à cette opération ;

si le résultat est positif et que l'indice de boucle j vérifie j<N, à l'étape S0733 :

- le TEE retire le premier chiffrement (Dec$_{HE}$1) de la donnée chiffrée reçue à l'étape S0732 effectuée pendant la boucle, puis
- au cours d'une étape S0735, applique le premier chiffrement à la donnée sous deuxième chiffrement et transmet la donnée chiffrée obtenue au serveur ;
- au cours d'une étape S0736, le serveur retire le deuxième chiffrement de la donnée reçue à l'issue de l'étape S0735, et fournit la donnée ainsi déchiffrée comme donnée d'entrée pour l'opération S0730 de la boucle de calcul suivante ;
- au cours d'une étape S0735a, le TEE calcule un tag de la donnée chiffrée calculée à l'étape S0735 et transmet ce tag au serveur ; puis
- au cours d'une étape S0736a, le serveur calcule le tag du chiffré démasqué (c'est-

à-dire du chiffré dont le masque, correspondant au deuxième chiffrement, a été retiré) à partir du tag reçu à l'issue de l'étape S0735a et du tag du masque, et fournit le tag du chiffré démasqué comme donnée d'entrée pour l'opération S0730a de la boucle de calcul suivante.

Grâce à une opération de signature, de vérification et, optionnellement, de re-chiffrement homomorphe dans le TEE, on construit un schéma qui établit de proche en proche que tous les chiffrés manipulés sont soit engendrés par le TEE (qui, en tant que détenteur de la clef secrète de chiffrement homomorphe n'est pas un attaquant sur le schéma homomorphe), soit engendrés par l'application des opérateurs homomorphes légitimes à des chiffrés engendrés par le TEE. Il n'y a donc pas d'adversaire CCA possible pour le chiffrement homomorphe, ce qui donne un niveau de sécurité renforcé.

Une signature est ici toute valeur jointe à un message et qui permet de prouver l'intégrité de celui-ci : A partir du message, la signature permet de vérifier que celui-ci n'a pas été altéré. Une signature est généralement obtenue en cryptographie à partir d'un hash du message, par exemple en utilisant une fonction de signature connue à clé publique telle que RSA ou ECDSA.

Par ailleurs, certains modes de mise en oeuvre exploitant la commutativité des deux chiffrements permettent réaliser les calculs avec une sécurité accrue, et notamment en bénéficiant d'une protection contre les attaques CCA.

Ainsi dans certains modes de mise en oeuvre du procédé, le premier calculateur est le TEE ;

pendant au moins une des boucles de calcul, dite boucle J, d'indice j=J, et de préférence à toutes les boucles, le procédé est exécuté de la manière suivante :

à l'étape S32 de la boucle J, en plus de la donnée chiffrée sous premier et deuxième chiffrement, le premier calculateur transmet au deuxième calculateur une signature de celle-ci, ainsi qu'une autre donnée chiffrée sous premier et deuxième chiffrement accompagnée d'une signature de cette dernière ;

à l'étape S33 de la boucle J, le serveur retire le premier chiffrement de la donnée chiffrée sous double chiffrement et de ladite autre donnée reçues à l'étape S32 ;

à une étape S0934 de la boucle J, le serveur applique l'opération élémentaire d'indice J aux deux données déchiffrées obtenues à l'étape S33 ;

à une étape S0934a de la boucle J, le serveur applique le premier chiffrement à la donnée obtenue (par application de l'opération élémentaire d'indice J) ;

le serveur calcule en outre une preuve de calcul prouvant que la donnée chiffrée obtenue à l'issue de l'étape S0934a est bien le résultat de l'application de l'opération élémentaire d'indice J aux deux données utilisées en entrée pour l'étape S0934, et transmet la donnée chiffrée obtenue à l'étape S0934a ainsi que la preuve au TEE ;

au cours d'une étape S0934b, le TEE vérifie au moins si la preuve correspond au résultat du calcul ; et,

si le résultat de la vérification est positif, à une étape S0936 le premier calculateur retire le deuxième chiffrement de la donnée, et fournit la donnée obtenue comme d'entrée pour une étape S31 de la boucle d'indice suivant si celle-ci a lieu ; si le résultat de la vérification est négatif, le TEE interrompt le traitement.

La vérification effectuée pendant la boucle J permet de déceler une attaque CCA qui aurait eu lieu pendant la boucle J.

En outre, dans certaines variantes de ces modes de mise en oeuvre, à une étape S31b de la boucle J, le premier calculateur obtient des signatures pour deux données chiffrées calculées à l'étape S31 effectuée pour l'itération j=J ou à une itération antérieure ;

à l'étape S32 de la boucle J, le premier calculateur transmet également les signatures desdites deux données chiffrées au deuxième calculateur ;

après avoir calculé la preuve de calcul lors de la boucle J, le deuxième calculateur renvoie au premier calculateur les deux données d'entrée et leurs signatures respectives ; et

la vérification effectuée à l'étape S34b inclut, pour chacune des deux données ainsi renvoyées au premier calculateur avec leurs signatures, une vérification que chacune des données correspond à sa signature.

Grâce à l'opération de vérification, effectuée de préférence dans un TEE, la validité du calcul réalisé par le serveur peut être assurée au client avec un surcoût plus faible qu'avec des protocoles classiques.

Certaines variantes des modes de mise en oeuvre ci-dessus, visant également à réaliser les calculs de manière plus sécurisée contre les attaques CCA, utilisent des schémas de chiffrement adaptés, comme le schéma de chiffrement de Paillier.

Dans ces variantes de mise en oeuvre du procédé, le premier calculateur est le TEE ;

le premier calculateur est le TEE ;

le deuxième chiffrement étant un chiffrement homomorphe assurant une sécurité contre les attaques CCA, par exemple le chiffrement de Paillier ;

pendant au moins une des boucles de calcul, dite boucle J, d'indice j=J, le procédé est exécuté de la manière suivante :

à l'étape S32 de la boucle J, en plus de la donnée chiffrée sous premier et deuxième chiffrement, le TEE transmet au serveur une autre donnée chiffrée ($[z']_{11,2}$) sous premier et deuxième chiffrement ;

à l'étape S33 de la boucle J, le serveur retire le premier chiffrement de la donnée chiffrée sous double chiffrement et de ladite autre donnée reçues à l'étape S32 ;

à une étape S1134 de la boucle J, le serveur applique l'opération élémentaire d'indice J aux deux données déchiffrées obtenues à l'étape S33 ;

à une étape S1134a de la boucle J, le serveur applique le premier chiffrement à la donnée obtenue par application de l'opération élémentaire d'indice J à l'étape S1134 ; le serveur transmet la donnée chiffrée obtenue à l'étape S1134a au TEE ; et,

à une étape S1136, le TEE retire le deuxième chiffrement de la donnée ($Dec_{CF}$), et fournit la donnée obtenue comme d'entrée pour une étape S31 de la boucle d'indice suivant si celle-ci doit avoir lieu.

Dans les modes de mise en oeuvre présentés ci-dessus, grâce au schéma cryptographique de calcul vérifiable, il est alors possible d'effectuer les vérifications indiquées précédemment de manière systématique, pour chacune des opérations de la combinaison d'opérations élémentaires (à moins que cette vérification ne soit pas nécessaire pour certains types d'opérations élémentaires, par exemple pour les additions).

Dans ce cas, cette vérification systématique permet d'apporter la preuve que le calcul effectué bénéficie d'une sécurité CCA.

BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :

[Fig. 1] est une vue schématique en perspective illustrant un premier et un sixième mode de mise en oeuvre de l'invention ;

[Fig. 2] est une vue schématique en perspective illustrant un deuxième et un troisième mode de mise en oeuvre de l'invention ;

[Fig. 3] est une vue schématique en perspective illustrant un quatrième mode de mise en oeuvre de l'invention ;

[Fig. 4] est une vue schématique en perspective illustrant un cinquième mode de mise en oeuvre de l'invention ;

[Fig. 5] est une vue schématique en perspective illustrant un sixième mode de mise en oeuvre de l'invention ;

[Fig. 6] est une vue schématique en perspective illustrant un septième mode de mise en oeuvre de l'invention ;

[Fig. 7] est une vue schématique en perspective illustrant un huitième mode de mise en oeuvre de l'invention ;

[Fig. 8] est une vue schématique en perspective illustrant les étapes de fourniture de données d'entrée, pour un neuvième mode de mise en oeuvre de l'invention ;

[Fig. 9] est une vue schématique en perspective illustrant les étapes de calcul, pour le neuvième mode de mise en oeuvre de l'invention ;

[Fig. 10] est une vue schématique en perspective illustrant les étapes de fourniture de données d'entrée, pour un dixième mode de mise en oeuvre de l'invention ;

[Fig. 11] est une vue schématique en perspective illustrant les étapes de calcul, pour le dixième mode de mise en oeuvre de l'invention ; et

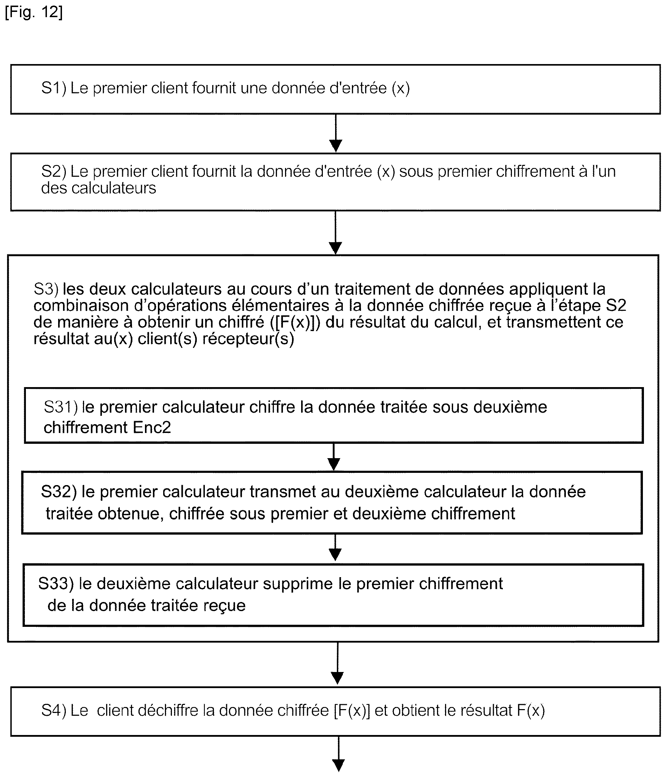

[Fig. 12] est un logigramme présentant de manière schématique les étapes d'un mode de mise en oeuvre d'un procédé selon la présente divulgation.

## DESCRIPTION DÉTAILLÉE DE L'INVENTION

A titre d'exemples de réalisation non limitatifs, différents modes de mise en oeuvre du procédé de traitement de données selon la présente divulgation vont maintenant être présentés.

Chacun de ces modes de mise en oeuvre implique les trois entités suivantes : un groupe d'au moins un client, un serveur et un TEE.

Tout type d'ordinateur peut être considéré comme constituant le serveur. Cependant, le serveur est de préférence un calculateur ayant de grandes capacités de calcul.

Dans les procédés de traitement de données selon la présente divulgation, chacun des calculateurs exécute les traitements dont l'exécution lui est confiée sur des données chiffrées. Ces données sont chiffrées avec un chiffrement indéchiffrable par le calculateur, de telle sorte que celui-ci n'ait pas accès aux informations contenues dans ces données. Ce chiffrement peut notamment être un chiffrement homomorphe ou un chiffrement par masquage.

Les fonctions de chiffrement et déchiffrement sont notées respectivement Encxx1, Enc$_{YY}$2,.. et respectivement Decxx1, Dec$_{YY}$2, ..., où '1', '2' sont des indices ; XX et YY indiquent le type de chiffrement utilisé : par exemple HE pour un chiffrement homomorphe, S pour un chiffrement symétrique, et M pour un chiffrement par masquage.

Les données chiffrées sont notées entre crochets sous la forme $[x]_1$, où '1' est l'indice de la fonction de chiffrement utilisée (ici : Enc1). La notation $[x]_{1,2}$ indique une donnée x qui a été chiffrée successivement avec la première fonction de chiffrement Enc1, puis la deuxième fonction de chiffrement Enc2.

Les étapes du procédé, dans les différents modes de mise en oeuvre présentés, sont notés sous la forme Sffnn, où ff fait référence au numéro de la figure sur laquelle le mode de mise en oeuvre est présenté, et nn est un numéro d'étape attribué à l'étape considérée. Dans les différents modes de mise en oeuvre présentés, autant que possible les étapes qui se correspondent portent le même numéro d'étape.

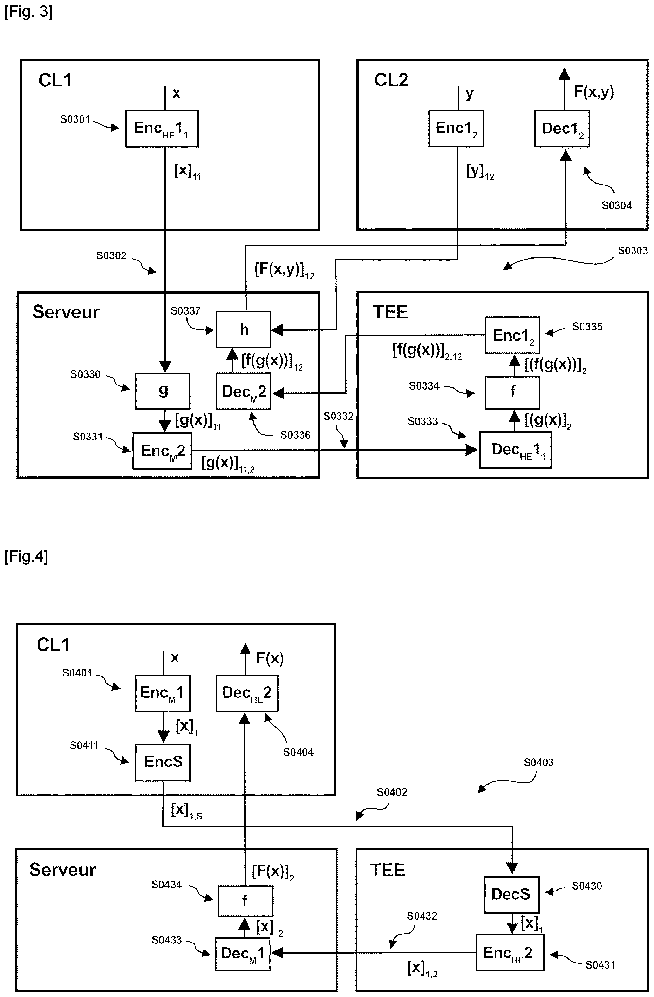

Chacun des modes de mise en oeuvre présentés vise à obtenir un résultat, F(x) ou F(x,y), que l'on peut obtenir (ou de manière équivalente, qui est calculable) en appliquant une fonction F à au moins d'une donnée d'entrée x, ou dans certains cas à plusieurs données d'entrée x, y, etc., comme dans le troisième mode de mise en oeuvre présenté ci-dessous en relation avec la Fig.3.

Cette fonction F se décompose en un certain nombre d'opérations de calcul élémentaire, ou opération élémentaire (chacune de celles-ci pouvant être de tout niveau de complexité).

Dans les exemples développés ici, ces opérations élémentaires sont représentées par des fonctions, notées ici f, g, h, ou également g$_j$ pour le cas où une fonction (gj) est appelée de manière itérative, en boucle, par le procédé de calcul.

Naturellement, le procédé de traitement de données proposé est applicable à des fonctions F décomposables en opérations élémentaires f telles qu'elles puissent être transposées et exécutées par calculateur sur les chiffrés des données. Cette condition n'est pas limitante si le schéma de chiffrement est un chiffrement complètement homomorphe, mais doit être prise en compte dans d'autres cas, par exemple pour un chiffrement seulement partiellement homomorphe, par exemple seulement additif ou multiplicatif.

### 1$^{er}$ mode de mise en oeuvre - Cas général

Dans un premier mode de mise en oeuvre du procédé présenté à titre d'exemple, on souhaite calculer un résultat F(x) à partir d'une donnée d'entrée x fournie par un client CL1.

Dans ce mode de mise en oeuvre, la fonction F se décompose en deux opérations élémentaires f et g : F(x) = f(g(x)).

Pour calculer F(x), les opérations suivantes sont réalisées :

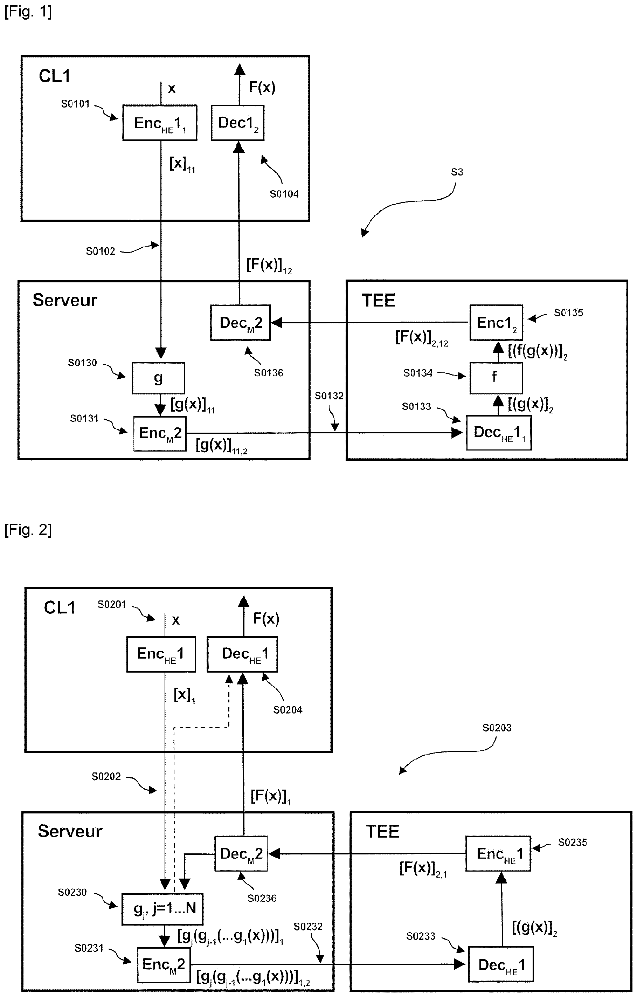

A l'étape S1 (étape S0101, sur la Fig.1), le client CL1 fournit la donnée x.

Le client CL1 applique ensuite un premier chiffrement Enc1$_1$ à la donnée x ; dans cet exemple, Enc1$_1$ est un chiffrement totalement homomorphe.

A l'étape S0102, le premier client CL1 transmet la donnée $[X]_{11}$, chiffrée sous chiffrement Enc1$_1$ au serveur.

Comme la donnée $[x]_1$ est chiffrée sous le chiffrement Enc1$_1$, dont la clé de déchiffrement n'est pas connue du serveur, le serveur est incapable d'accéder aux informations contenues dans la donnée $[x]_1$.

A l'étape S0130, le serveur réalise une première opération élémentaire, g, consistant à appliquer une fonction g à la donnée reçue $[x]_{11}$, et obtient ainsi la donnée g($[x]_{11}$). Lorsque le chiffrement Enc1$_1$ est commutatif (au sens de la fonction de composition o) avec la fonction g, cette valeur est égale à $[g(x)]_{11}$, comme cela est représenté sur la Fig.1. C'est le cas par exemple lorsque le chiffrement $Enc1_1$ est un chiffrement FHE, en prenant en compte la convention suivant laquelle la fonction g appliquée aux clairs et la fonction g appliquée aux chiffrés homomorphes correspondants sont toutes deux notées g.

Ensuite à l'étape S31 (S0131), le serveur applique un deuxième chiffrement, Enc2, à la donnée $[g(x)]_{11}$, qui devient donc la donnée $[g(x)]_{11,2}$.

Lorsque le premier chiffrement $Enc1_1$ est un chiffrement totalement homomorphe, tout type de chiffrement peut être utilisé comme deuxième chiffrement Enc2.

Dans le mode de mise en oeuvre présenté sur la Fig.1, le premier chiffrement $Enc1_1$ est un chiffrement totalement homomorphe, et le deuxième chiffrement Enc2 est un chiffrement par masquage. Appliquer le chiffrement secondaire consiste donc à ajouter un masque m à la donnée courante $[g(x)]_{11}$. Le résultat est donc la donnée $[g(x)]_{11,2}$, avec $[g(x)]_{11,2}$ = $[g(x)]n \oplus m$, la fonction $\oplus$ étant une addition d'un clair et d'un chiffré.

A l'étape S32 (S0132), le serveur transmet la donnée $[g(x)]_{11,2}$, chiffrée sous double chiffrement $Enc1_1$ et Enc2 au deuxième calculateur, le TEE.

Comme la donnée $[g(x)]_{11,2}$ est chiffrée sous le deuxième chiffrement (c'est-à-dire masquée), le TEE est incapable d'accéder aux informations contenues dans cette donnée.

A l'étape S33 (S0133), le TEE supprime le premier chiffrement (retire la couche de chiffrement homomorphe) de la donnée $[g(x)]_{11,2}$, et obtient ainsi une donnée $[g(x)]_2$, toujours masquée par le masque m.

Dans la plupart des variantes de ce mode de mise en oeuvre, le procédé de calcul se poursuit alors par la réalisation par le TEE de l'étape S0135 (décrite plus loin), sur la base directement de la donnée $[g(x)]_{1,2}$.

Cependant, une étape intermédiaire S0134 de calcul consistant à appliquer une fonction f à la donnée $[g(x)]_2$ produite par l'opération S33 peut être prévue lorsque la fonction f et la fonction de deuxième chiffrement/déchiffrement (généralement, par masquage) sont commutatives pour la loi de composition de fonctions (fonction 'o' ; f o g (.) est aussi notée f(g(.))).

Dans ce cas, comme cela est représenté sur la Fig.1 à une étape intermédiaire S0134 le TEE applique la fonction f à la donnée reçue $[g(x)]_2$. Il obtient ainsi la donnée $[f(g(x))]_2$.

On suppose dans la suite à titre d'exemple que dans le mode de mise en oeuvre présenté, l'étape S0134 est réalisée.

A l'étape S0135, le TEE applique un chiffrement additionnel $Enc1_2$ (un chiffrement homomorphe) à la donnée $[f(g(x))]_2$, et obtient ainsi la donnée chiffrée intermédiaire $[f(g(x))]_{2,12}$, qu'il transmet chiffrée sous double chiffrement (chiffrée en homomorphe et masquée) au serveur.

A l'étape S0136, le serveur supprime alors le deuxième chiffrement en appliquant la fonction de déchiffrement Dec2 appliqué à la donnée chiffrée intermédiaire $[f(g(x))]_{2,12}$, c'est-à-dire en soustrayant le masque m, et obtient une donnée chiffrée intermédiaire $[f(g(x))]_{12}$ sous le chiffrement additionnel $Enc1_2$.

Le serveur termine alors l'étape S3 (S0103) en transmettant le résultat chiffré $[F(x)]_{12}$, au client CL1.

A l'étape S0104, le client CL1 déchiffre le résultat chiffré $[F(x)]_1$, c'est-à-dire lui applique la fonction de déchiffrement $Dec1_2$, et obtient ainsi le résultat F(x).

Dans ce mode de mise en oeuvre, le deuxième calculateur est un TEE. Comme le deuxième calculateur doit être capable de retirer et d'appliquer le chiffrement homomorphe (aux étapes S0133 et 0135), le choix d'un calculateur sécurisé comme un TEE comme deuxième calculateur permet de réaliser les fonctions de chiffrement/déchiffrement $Enc1_2$ et $Dec1_2$, en utilisant par exemple une paire de clés symétrique, ce qui permet d'exécuter ces fonctions dans des conditions de sécurité satisfaisantes.

Le chiffrement additionnel $Enc1_2/Dec1_2$ peut être le même chiffrement que le premier chiffrement $Enc1_1/Dec1_1$, avec la même clé de chiffrement ou non. Il peut aussi s'agir de deux chiffrements différents.

Dans ce mode de mise en oeuvre, le TEE retire le chiffrement homomorphe (DecHE11, étape S0133) et applique le chiffrement additionnel (Enc12, étape S0135) : ce sont deux exemples de fonctions support appliquées par le TEE. L'étape S0133 contribue à l'exécution de calculs homomorphes par le serveur. L'étape S0135 sert à chiffrer des résultats envoyés au client. On note que le serveur réalise également des fonctions support, par exemple à l'étape S0136. Par ailleurs, dans ce mode de réalisation, à l'étape S0134, le TEE réalise une opération élémentaire, qui n'est pas une fonction support.

## 2ème mode de mise en oeuvre

Dans le deuxième mode de mise, illustré par la Fig.2, on souhaite également calculer un résultat F(x) à partir d'une donnée d'entrée x fournie par un client CL1.

Dans ce deuxième mode de mise en oeuvre, la fonction F à calculer se décompose en une pluralité d'opérations élémentaires $g_j$, où j=1....N, de la manière suivante :

EP 4 576 650 A1

$$F(x) = g_N\,(g_{N-1}\,(g_{N-2}\,(....\,(g_1(x)))))$$

Les opérations élémentaires $g_j$ sont appliquées successivement à la donnée en cours de manière itérative en répétant N fois une boucle de calcul.

A chaque itération d'indice j, le premier calculateur, le serveur, applique une fonction élémentaire $g_j$ à la donnée traitée en cours $g_{j-1}\,(g_{j-2}\,(g_{j-3}\,(....\,(g_1(x))))))$. Pour simplifier, dans le présent document la donnée traitée $g_j\,(g_{j-1}\,(g_{j-2}\,(....\,(g_1\,(x))))))$ conventionnellement est notée $g_j(x)$.

Comme le nombre d'opérations élémentaires $g_j$ à appliquer peut être très élevé, il peut être nécessaire pour certains schémas de chiffrement de réinitialiser périodiquement le bruit. Cela concerne notamment le cas où le premier chiffrement est un chiffrement homomorphe dans lequel une composante de bruit est intégrée au chiffré homomorphe : il est alors nécessaire périodiquement de réinitialiser le bruit (opération dite de 'Bootstrapping') (pour plus de détails, se reporter à Ref.2).

Ce deuxième mode de mise en oeuvre du procédé apporte une solution pour cette réinitialisation. Le TEE dans ce cas avantageusement est utilisé pour réaliser l'opération de réinitialisation. A chaque itération, le serveur applique à la donnée une fonction élémentaire $g_j$, et le TEE effectue une opération de réinitialisation du bruit.

Les opérations réalisées dans le deuxième mode de réalisation sont les mêmes que celles effectuées dans le premier mode de mise en oeuvre hormis sur les points suivants :

La principale différence est que, comme la fonction F se décompose en N opérations élémentaires $g_j$, à l'issue de l'étape S0236 de suppression du deuxième chiffrement (de soustraction du masque m)(comparable à la fonction S0136 du premier mode de mise en oeuvre), dans le deuxième mode de mise en oeuvre, il y a deux possibilités :

Si l'indice j est strictement inférieur à N, le chiffré $[g_j\,(g_{j-1}\,(g_{j-2}\,(....\,(g_1(x))))))]_1$ calculé à l'étape S0236 par le serveur est alors fourni comme donnée d'entrée pour l'itération suivante de la boucle de calcul (composée des étapes S0230, S0231, S0232, S0233, S0235, S0236).

Inversement lors de la dernière itération, dans laquelle l'indice j est égal à N, le chiffré $[g_N\,(g_{N-1}\,(g_{N-2}\,(....\,(g_1(x)))))))]_1$ calculé à l'étape S0236 par le serveur, et égal au chiffré du résultat $[F(x)]_1$, est alors transmis au client CL1. Celui-ci déchiffre alors ce chiffré et obtient ainsi le résultat (étape S4).

Cependant, dans une variante, lors de la dernière boucle de calcul (j=N), une fois que l'étape S0230 est réalisée, au lieu de réaliser les étapes S0231, S0232, S0233 et S0235 pour permettre l'opération de réinitialisation du bruit, le serveur transmet le résultat obtenu à l'étape S0230 directement au client CL1 (flèche en pointillés sur la Fig.2). Le client peut alors retirer le premier chiffrement du résultat transmis et obtenir ainsi le résultat du calcul F(x).

A chaque itération, l'opération élémentaire de calcul S0230 (application d'une fonction $g_j$) par le serveur est donc suivie par des opérations S0233 et S0235 de réinitialisation du bruit par le TEE.

La fonction du TEE est donc uniquement de retirer puis réappliquer le chiffrement homomorphe, en appliquant les fonctions $Dec_{HE1}$ et $Enc_{HE1}$, qui sont deux fonctions support : contrairement au premier mode de mise en oeuvre, le TEE réalise uniquement des fonctions support, et ne réalise pas d'opération élémentaire de calcul f ; il n'y a pas d'étape comparable à l'étape S0134.

Avantageusement, notamment dans les schémas de chiffrement fondés sur le problème LWE, les opérations de chiffrement et de déchiffrement peuvent être extrêmement rapides, ce qui fait que les traitements (opérations S0233, S0235) réalisés par le TEE ne ralentissent que de manière négligeable les calculs réalisés par le serveur.

Dans certains modes de mise en oeuvre, le masque m est un masque fourni au serveur par le client CL1 dans un flux de clés ('keystream'). Dans ce cas, le deuxième chiffrement effectué à l'étape S0231 à chaque itération d'indice j utilise un masque $m_j$ ayant une valeur spécifique à l'itération d'indice j.

3<sup>ème</sup> mode de mise en oeuvre

Un troisième mode de mise en oeuvre, également illustré par la Fig.2, comporte les mêmes opérations que le deuxième mode de mise en oeuvre.

La différence entre le deuxième et le troisième mode de mise en oeuvre est qu'alors que dans le deuxième, le TEE réalise une opération de réinitialisation du bruit, par contraste dans le troisième mode de mise en oeuvre, le TEE réalise une relinérisation de la donnée chiffrée $[g_j\,(g_{j-1}\,(g_{j-2}\,(....\,(g_1(x)))))))]_{1,2}$.

Cette relinéarisation avantageusement permet de modifier la donnée chiffrée : l'opération de relinéarisation permet de restaurer la forme de la donnée chiffrée, et de redonner à celle-ci la forme des chiffrés initiaux ou chiffrés 'frais' (en Anglais : 'fresh ciphertext'). Le TEE avantageusement est utilisé pour effectuer l'opération de relinéarisation.

Les schémas de chiffrement pour lesquels une relinéarisation est nécessaire peuvent notamment être des schémas de type 'à niveau dit LHE ('Leveled Homomorphic Encryption'), tels que BGV et BFV par exemple.

4ème mode de mise en oeuvre

Un quatrième mode de mise en oeuvre, illustré par la Fig.3, correspond à un cas où le calcul à effectuer est une fonction F de plusieurs variables, fournies respectivement par deux clients (ou utilisateurs) ou plus.

Dans l'exemple on a considéré seulement le cas de deux variables x et y fournies respectivement par deux clients CL1 et C2L, mais le procédé est applicable à un nombre quelconque de variables, fournies respectivement par un nombre quelconque de clients CL1... CLN.

Dans l'exemple présenté, la fonction F se décompose en opérations élémentaires de la manière suivante : $F(x,y) = h(f(g(x)),y))$.

Les opérations réalisées dans ce mode de réalisation sont les mêmes que celles effectuées dans le premier mode de mise en oeuvre hormis sur les points suivants :

Lors de l'opération initiale S1 (S0301), deux clients CL1 et CL2 (et non seulement le client CL1) fournissent une donnée d'entrée, respectivement x et y, pour le traitement de données.

Chacune de ces deux données est chiffrée : Un premier chiffrement $Enc1_1$ est appliqué à x par le client CL1, et un autre 'premier chiffrement' $Enc1_2$ est appliqué à y par le deuxième client. Les chiffrements $Enc1_1$ et $Enc1_2$ sont différents ou non l'un de l'autre ; ils peuvent aussi avoir le même schéma de chiffrement, mais avec des clés différentes.

Les données chiffrées obtenues $[x]_{11}$ et $[y]_{12}$ sont alors transmises au serveur (étape S0302).

Les opérations suivantes S0330, S0331, S0332, S0333, S0334, S0335 et S0336 sont alors sensiblement identiques aux opérations de même numéro d'étape effectuées dans le premier mode de mise en oeuvre.

Il faut noter cependant qu'à l'étape S0335, le premier chiffrement appliqué est celui utilisé par le deuxième client CL2, de manière à préparer la fourniture à ce deuxième client, en sortie du serveur, d'une donnée traitée chiffrée sous le premier chiffrement $Enc1_2$ qui est celui utilisé par le client CL2.

D'autre part, à l'issue de l'étape S0336, au lieu que le résultat soit transmis directement au client (CL2) (comme à l'étape S0136), une opération élémentaire h est préalablement appliquée (étape S0337). Cette opération h utilise comme données d'entrée la donnée chiffrée $[f(g(x))]_{12}$ et la donnée chiffrée $[y]_{12}$, et fournit en sortie un chiffré du résultat $[F(x,y)]_{12}$.

Ce chiffré du résultat $[F(x,y)]_{12}$, est alors transmis au client CL2. Celui-ci déchiffre alors ce chiffré et obtient ainsi le résultat (étape S4).

Dans cet exemple, la variable y n'intervient que dans une phase de calcul dans laquelle la variable x a déjà subi deux traitements successifs g et f, ayant permis d'obtenir f(g(x)). Cela dit, naturellement toute forme est possible pour la fonction F ; notamment la variable y pourrait être combinée à la variable x dès la première phase de calcul.

D'autre part, dans ce mode de mise en oeuvre la fonction g est appliquée à la donnée x dans une première opération élémentaire réalisée par le serveur, et est suivie par une deuxième opération élémentaire f réalisée par le TEE. La troisième opération élémentaire est à nouveau une opération réalisée dans le serveur.

On comprend que de manière générale, toute répartition d'opérations élémentaires entre les deux calculateurs est envisageable. Ainsi la donnée traitée dans chacun des calculateurs peut être fonction de tout ou partie des variables d'entrées (x et y dans cet exemple). De plus, bien que ce ne soit pas le cas dans ce mode de mise en oeuvre, dans certains modes de mise en oeuvre le calcul peut impliquer des calculs itératifs entre les deux calculateurs, comme dans le mode de mise en oeuvre illustré par la Fig.2.

La particularité du quatrième mode de mise en oeuvre, outre le fait que plusieurs données d'entrée sont fournies par les différents clients (CL1 et CL2) en entrée du procédé, est que le procédé permet de réaliser un transchiffrement lorsque le schéma de chiffrement $Enc1_1/Dec1_1$ est différent du schéma $Enc1_2/Dec1_2$. Le procédé permet qu'à partir d'une donnée x chiffrée en entrée avec le schéma de chiffrement homomorphe $Enc1_1$, le client CL2 qui reçoit le résultat en sortie reçoit le résultat chiffré avec un autre schéma de chiffrement, le schéma $Enc1_2/Dec1_2$. On notera que le deuxième client CL2 pourrait éventuellement être le client CL1, disposant alors des deux schémas de chiffrement.

Si dans ce mode de mise en oeuvre, les schémas de chiffrement homomorphes utilisent des paires de clés asymétriques, le TEE utilise la clé privée du schéma de chiffrement homomorphe $Enc_{HE}1_1$ ; et pour chiffrer la donnée sous chiffrement $Enc1_2$ à l'étape S0335, le TEE dispose de la clé publique du schéma de chiffrement $Enc1_2$ et n'a pas besoin de la clé privée du client CL2.

5ème mode de mise en oeuvre

Dans un cinquième mode de mise en oeuvre, illustré par la Fig.4, on cherche à calculer le résultat F(x) d'une fonction F qui ne nécessite que d'appliquer une opération élémentaire f.

Les opérations réalisées dans ce mode de réalisation sont les mêmes que celles effectuées dans le premier mode de mise en oeuvre hormis sur les points suivants :

Tout d'abord, à l'étape S1 (S0401), le client CL1 après avoir appliqué le premier chiffrement $Enc_M1$, qui est un chiffrement par masquage, applique un autre chiffrement $Enc_S$. Dans ce mode de mise en oeuvre, cet autre chiffrement est un chiffrement symétrique (Encs,Decs), qui ne constitue ni le premier chiffrement ni le deuxième chiffrement au sens de la présente divulgation. Ce chiffrement symétrique $Enc_S$ est un chiffrement additionnel, utilisé pour garantir la confidentialité de la donnée transmise vis-à-vis du serveur. Bien que la donnée $[x]_{1,s}$ dans ce mode de mise en oeuvre transmise directement par le client au TEE (en tant que premier calculateur), dans d'autres modes de mise en oeuvre cette donnée peut être transmise via le serveur (notamment parce qu'en pratique le TEE est le plus souvent intégré au serveur).

Après avoir appliqué successivement le premier chiffrement $Enc_M1$ et le chiffrement additionnel symétrique $Enc_S$, le client CL1 transmet la donnée chiffrée $[x]_{1,S}$ au premier calculateur, qui est le TEE et non le serveur, contrairement au premier mode de mise en oeuvre.

A réception de la donnée $[x]_{1,S}$, le TEE retire tout d'abord le chiffrement symétrique (en appliquant la fonction Decs)(étape S0430).

Les étapes suivantes S0431, S0432, S0433 et S0434 sont ensuite réalisées de manière similaire aux étapes de mêmes numéros d'étape du premier mode de mise en oeuvre (avec la différence importante que le premier calculateur est maintenant le TEE, et que le deuxième calculateur est le serveur) :

Le TEE applique le deuxième chiffrement ($Enc_{HE}2$) à la donnée (étape S0431) et obtient la donnée $[x]_{1,2}$, qu'il transmet au serveur (étape S0432).

Le serveur retire le premier chiffrement de la donnée (étape S0433), puis effectue l'opération élémentaire S0434 durant laquelle il applique la fonction f à la donnée $[x]_2$. Il obtient ainsi le chiffré du résultat $[F(x)]_2$ qu'il transmet au client CL1. Le client retire alors le deuxième chiffrement (en appliquant $Dec_{HE}2$, opération S4 (S0404) et obtient ainsi le résultat F(x).

Dans ce mode de mise en oeuvre, le premier chiffrement $Enc_M1$ est un chiffrement par masquage. Appliquer ce chiffrement consiste donc à ajouter un masque m à la donnée. Dans le cas présent, cela consiste donc à remplacer la donnée courante x par la somme x + m. On a ainsi : $[x]_1 = x + m$.

Pour permettre au serveur de retirer ce chiffrement, le masque m est partagé entre le client CL1 et le serveur. Inversement, comme la donnée $[x]_{1,s}$ est chiffrée à l'aide de ce masque m avant d'être transmise au TEE, celui-ci ne peut connaître le contenu de la donnée traitée qui lui est transmise : le chiffrement par masquage est indéchiffrable pour le TEE.

Par ailleurs, afin de pouvoir appliquer le deuxième chiffrement, homomorphe, $Enc_{HE}2$, le TEE dispose de la clé publique de ce dernier chiffrement, le client CL1 disposant quant à lui de la clé privée correspondante pour pouvoir retirer ce chiffrement (Fonction $Dec_{HE}2$).

6ème mode de mise en oeuvre

Dans le 6ème mode de mise en oeuvre, on souhaite calculer un résultat F(x) à partir d'une donnée d'entrée x ; la fonction F constitue en elle-même une unique opération élémentaire F.

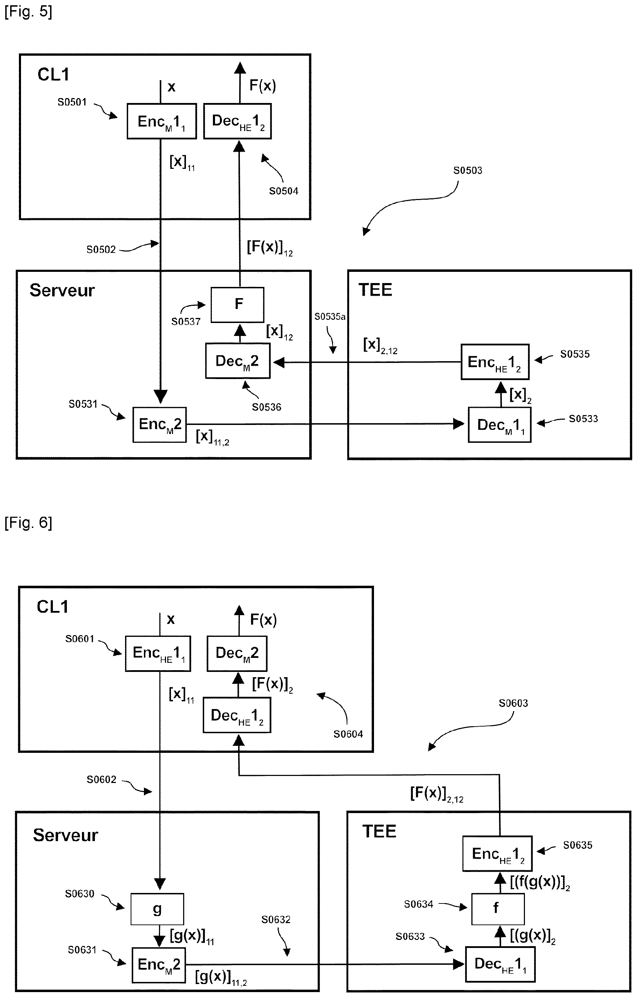

Ce 6ème mode de mise en oeuvre permet, comme le 5ème mode de mise en oeuvre, de réaliser un transchiffrement. Ce mode de mise en oeuvre est illustré par la Fig.5.

Dans ce 6ème mode de mise en oeuvre, les opérations réalisées sont sensiblement identiques aux opérations de même numéro d'étape réalisées pour le 1er mode de mise en oeuvre, avec néanmoins les particularités ou parfois les différences suivantes :

A l'étape S1 (S0501), le premier chiffrement $Enc1_1$ appliqué n'est pas un chiffrement homomorphe, mais un chiffrement par masquage : La donnée chiffrée $[x]_{11}$ est définie par : $[x]n = x+m1$, où m1 est un premier masque qui est inconnu du serveur et donc indéchiffrable par celui-ci.

La donnée $[x]_{11}$ est alors transmise au serveur à l'étape S2 (S0502).

A l'étape S31 (S0531), le serveur applique à la donnée un deuxième chiffrement $Enc_M2$ qui dans ce mode de mise en oeuvre est également un chiffrement par masquage. La donnée obtenue, $[x]_{11,2}$ est alors transmise au TEE (étape S0532).

A l'étape S0533, le TEE retire le premier chiffrement (c'est-à-dire applique la fonction $Dec1_1$, en retranchant la valeur du premier masque m1).

Puis à l'étape S0535, le TEE applique à nouveau un chiffrement déchiffrable par le client CL1, à savoir un chiffrement totalement homomorphe, par une fonction $Enc1_2$, et transmet le résultat $[x]_{2,12}$ au serveur.

A l'étape S0536 le serveur retire le deuxième chiffrement (fonction $Dec_M2$) et obtient un chiffré de la donnée traitée $[x]_{12}$.

Ensuite, à l'étape S0537 le serveur applique la fonction F au chiffré $[x]_{12}$ et obtient le chiffré homomorphe du résultat, $[F(x)]_{12}$.

Il envoie alors ce chiffré $[F(x)]_{12}$ au client, qui le déchiffre et obtient ainsi le résultat F(x) à l'étape S4 (S0504).

7ème mode de mise en oeuvre

Un 7ème mode de mise en oeuvre, illustré par la Fig.6, permet comme dans les 5ème et 6ème mode de mise en oeuvre de réaliser un transchiffrement.

Ce 7ème mode de mise en oeuvre est proche du mode de mise en oeuvre de la Fig.1. Par conséquent, on peut considérer que ces deux modes de mise en oeuvre sont identiques, à l'exception seulement des différences qui vont maintenant être présentées.

La fonction F, comme dans le premier mode de mise en oeuvre, se décompose de la manière suivante : $F(x) = f(g(x))$.

Les étapes S0601, S0602, S0630, S0631, S0632, S0633, S0634 et S0635 sont sensiblement les mêmes que les étapes de mêmes numéros d'étape du premier mode de mise en oeuvre, *mutatis mutandis.*

Notamment, l'étape S0634 ne peut avoir lieu que si la fonction f et la fonction de deuxième chiffrement/déchiffrement sont commutatives pour la loi de composition de fonctions.

A l'étape S1 (S0601) comme dans le premier mode de mise en oeuvre, un chiffrement totalement homomorphe est appliqué par la fonction $Enc_{HE}1_1$.

Le chiffrement $Enc_{HE}1_2$ peut notamment être un chiffrement symétrique.

De plus, à l'issue de l'étape S0635, dans le 7ème mode de mise en oeuvre, le TEE transmet le résultat chiffré $[F(x)]2,12$ directement au client CL1 (Ce résultat chiffré $[F(x)]_{2,12}$ pourrait transiter par le serveur, puisque le chiffrement $Enc_{HE}1_2$ n'est pas déchiffrable par ce dernier).

Dans le 7ème mode de mise en oeuvre, enfin, à l'étape S4 (S0604) le client CL1 réalise donc un double déchiffrement, d'abord en appliquant la fonction $Dec_{HE}1_2$, puis en appliquant la fonction $Dec_M2$. Il obtient ainsi le résultat $F(x)$ en clair.

8$^{ème}$ mode de mise en oeuvre

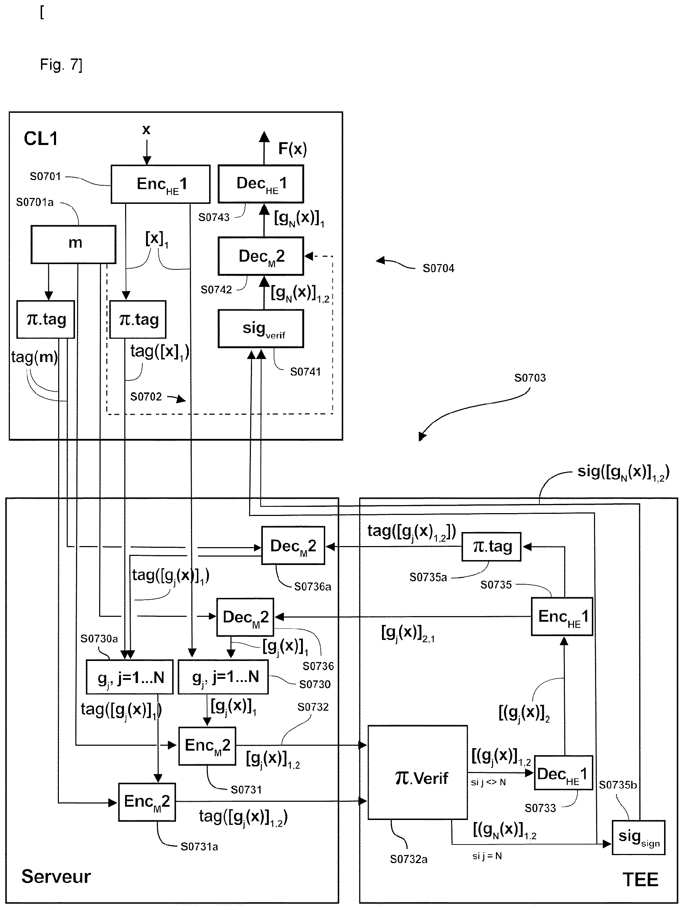

Le 8$^{ème}$ mode de mise en oeuvre, illustré par la Fig.7, concerne le cas où l'on souhaiterait spécifiquement se prémunir contre le cas où à la fois le serveur aurait un comportement malicieux, et le TEE aurait quant à lui un comportement « honnête mais curieux ».

Ce mode de mise en oeuvre est applicable dès lors qu'il existe pour le calcul à réaliser un protocole de calcul vérifiable permettant de vérifier les résultats de tous les calculs réalisés pendant les opérations de calcul élémentaire. Dans ce cas, le calcul est réparti de la manière suivante : les opérations élémentaires sont effectuées par le serveur, notamment sous chiffrement complètement homomorphe ; chacune de ces opérations élémentaires est vérifiée par le TEE.

Ce protocole permet de vérifier que le calcul s'est exécuté de manière conforme en effectuant une opération de vérification pour chacune des opérations élémentaires effectuées.

Des exemples de protocoles de calcul vérifiable sont cités par exemple par le document Ref.5.

L'intégrité des opérations réalisées au sein du TEE peut quant à elle être garantie par ailleurs, en utilisant un procédé d'attestation à distance (en Anglais, 'Remote Attestation').

Lorsque ces dispositions sont adoptées, avantageusement le procédé de calcul permet non seulement d'assurer la confidentialité des données, mais également l'intégrité du calcul.

Un exemple de mise en oeuvre du procédé, indiquant les vérifications à réaliser est représenté de manière schématique par la Fig.7.

Dans ce mode de mise en oeuvre comme dans le 2$^{ème}$ mode de mise en oeuvre, la fonction F à calculer se décompose de la manière suivante :

$$F(x) = g_N (g_{N-1} (g_{N-2} (\ldots (g_1(x)))))$$

Par conséquent, les opérations élémentaires sont réalisées de manière itérative en effectuant N fois une même boucle de calculs : chaque étape de calcul par le serveur permet d'appliquer, lors d'une boucle d'indice j, une fonction élémentaire $g_j$ à la donnée en cours $g_{j-1} (g_{j-2} (g_{j-3} (\ldots (g_1(x)))))$, également notée conventionnellement, pour simplifier, $g_{j-1}(x)$.

Les opérations réalisées dans le cadre de ce mode de mise en oeuvre comprennent globalement les opérations (ou étapes) du deuxième mode de mise en oeuvre, auxquelles s'ajoutent des opérations supplémentaires de vérification.

Une vérification est donc réalisée pour chaque opération élémentaire, lors de chacune des boucles de calcul successives.

Ainsi dans ce mode de mise en oeuvre, les opérations suivantes sont réalisées :

A l'étape S0701, le client CL1 fournit une donnée d'entrée x. Il calcule un chiffré $[x]_1$ de cette donnée x pour un premier chiffrement $Enc_{HE}1$ ($Enc_{HE}1$ est un chiffrement complètement homomorphe).

Le chiffré $[x]_1$ est également utilisé pour calculer un tag du chiffré $[x]_1$ de la donnée d'entrée, noté $tag([x]_1)$, appelé tag de donnée.

Un tag désigne ici une valeur, que l'on pourrait appeler aussi un marqueur ou une étiquette, qui est calculée à partir d'une donnée initiale et conservée de manière ensuite à permettre l'authentification de la donnée initiale ou de garder une trace de celle-ci, dans le cadre d'un protocole de vérification de calcul vérifiable.

Le tag de donnée tag($[x]_1$), comme tous les tags mentionnés ici, est calculé par une fonction de calcul de tag $\pi$.tag, dans le cadre d'un protocole de calcul vérifiable $\pi$. Ce protocole est déterminé en fonction du calcul à réaliser afin de permettre la vérification de celui-ci.

En parallèle, lors d'étapes S0701a successives, le client CL1 génère un flux de clés de chiffrement ('keystream'). A chaque itération de la boucle de calcul qui va être décrite ci-dessous entre les deux calculateurs, le serveur et le TEE, le client CL1 génère une nouvelle valeur de clé $m_j$ à une étape S0701a. De plus, à partir de cette valeur de clé $m_j$, également à chaque étape S0701a, le client CL1 calcule également un tag de clé tag($m_j$).

Ainsi, à chaque itération de la boucle de calcul d'indice j (j=1... N), le client CL1 transmet au serveur la nouvelle clé calculée $m_j$ et le tag de clé associée tag($m_j$).

L'envoi des clés $m_j$ permet au serveur de réaliser les opérations d'application et de suppression du deuxième chiffrement (Enc$_M$2, Dec$_M$2) à la donnée traitée aux étapes S0731 et S0736 décrites plus loin.

De manière similaire l'envoi des tags de clés tag($m_j$) permet au serveur de réaliser les opérations d'application et de suppression du deuxième chiffrement (Enc$_M$2, Dec$_M$2) aux tags de données aux étapes S0731a et S0736a décrites plus loin.

A l'étape S0702, le client CL1 transmet au serveur la donnée chiffrée $[x]_1$ et le tag de donnée tag($[x]_1$).

A réception des informations reçues (donnée chiffrée $[x]_1$, tag de celle-ci tag$[x]_1$, clés $m_j$, tags de clés tag($m_j$), le serveur et le TEE calculent progressivement le résultat F(x) en réalisant N boucles de calcul, de la manière suivante à l'étape S3 (S0703).

A chaque boucle d'indice j (j=1... N), le serveur réalise une opération élémentaire $g_j$, en appliquant une fonction $g_j$ à la donnée traitée reçue en entrée (étape S0730). A la 1ère itération, la donnée reçue en entrée est la donnée chiffrée $[x]_1$ ; aux itérations suivantes, la donnée reçue en entrée à l'étape S0730 à une itération d'indice j est une donnée traitée intermédiaire $[g_{j-1}(g_{j-2}(....g_1(x)))]_1$ calculée lors d'une étape de déchiffrement S0736 qui sera décrite plus loin.

En parallèle, à une étape S0730a le serveur applique à nouveau la fonction $g_j$, mais cette fois il l'applique successivement, à la 1ère itération, au tag de donnée tag($[x]_1$) de la donnée chiffrée (initiale) $[x]_1$ ; puis, aux itérations d'indice j suivantes, aux tags de donnée successifs des tags de données intermédiaires tag($[g_{j-1}(g_{j-2}(....g_1(x)))]_1$), également notés tag($[gj(x)]_1$) calculés lors d'étapes de déchiffrement S0736a qui seront décrites plus loin.

La fonction de calcul de tag est commutative avec les opérations élémentaires gj ; par conséquent, le résultat peut s'écrire indifféremment $g_j$(tag($[g_{j-1}(g_{j-2}(....g_1(x)))]_1$)) ou tag($[g_j(g_{j-1}(g_{j-2}(....g_1(x)))]_1$)), noté également tag($[g_j(x)]_1$).

Le résultat $[gj(gj-1(....g1(x)))]_1$, noté également $[g_j(x)]_1$ obtenu à l'étape S0730 est ensuite chiffré par masquage à l'étape S31, avec le masque $m_j$, ce qui constitue l'application d'un deuxième chiffrement (fonction Enc$_M$2).

En parallèle, à partir du tag (tag$[g_j(x)]_1$)) obtenu à l'étape S0730a et du tag tag($m_j$) du masque $m_j$, le serveur calcule le tag du chiffré sous double chiffrement de la donnée traitée (tag($[g_j(x)]_{12}$)) à l'étape S0731a, ce qui nécessite l'application du deuxième chiffrement à la donnée traitée (fonction Enc$_M$2).

Toutes les données traitées par le serveur qui sont fonctions de la donnée d'entrée x sont sous premier chiffrement Enc$_{HE}$1et par conséquent sont indéchiffrables pour le serveur, qui est incapable d'accéder aux informations contenues dans ces données.

Le serveur transmet alors au TEE en parallèle la donnée $[g_j(x)]_{1,2}$ et le tag de donnée tag($[g_j(x)]_{1,2}$), tous deux sous double chiffrement à l'étape S32 (S0732).

A l'étape S0732a le deuxième calculateur, le TEE, effectue alors une vérification du calcul réalisé conformément au protocole de calcul vérifiable, sur la base notamment du chiffré de la donnée $[g_j(x)]_{1,2}$ et du tag associé tag($[gj(x)]_{1,2}$).

Cette vérification peut dans certains cas inclure la vérification suivante : le TEE calcule de son côté le tag de donnée tag($[g_j(x)]_{1,2}$) à partir de la donnée $[g_j(x)]_{1,2}$ sous double chiffrement, et vérifie que le tag obtenu est identique à celui reçu à l'étape S0732.

Si le résultat de la vérification est négatif, le traitement de données est arrêté et un message d'alerte est transmis.

Si le résultat de la vérification inversement est positif, le TEE continue le traitement.

Pour les boucles d'indice j<N :

Si la vérification effectuée à l'étape S0732a indique que le traitement se déroule de manière conforme aux attentes, le TEE retire alors le premier chiffrement (applique la fonction Dec$_{HE}$1) de la donnée $[g_j(x)]_{2,1}$, c'est-à-dire qu'il en soustrait le masque $m_j$, et obtient ainsi la donnée $[g_j(x)]_2$ à l'étape S33 (S0733).

Le TEE applique alors à nouveau le premier chiffrement (applique la fonction Enc1) à la donnée $[g_j(x)]_2$, c'est-à-dire qu'il lui ajoute un nouveau masque $m_j$, et obtient ainsi la donnée $[g_j(x)]_{2,1}$ (étape S0735).

Le TEE transmet alors cette donnée au serveur comme donnée d'entrée pour permettre l'exécution pour l'indice j+1 de l'étape S0736.

A l'étape S0736 (dans la boucle d'indice j+1), le serveur supprime le deuxième chiffrement (applique la fonction

$Dec_M2$) de la donnée $[g_j(x)]_{2,1}$ et obtient donc la donnée $[g_j(x)]_1$, qui va servir de donnée d'entrée pour l'étape S0730 de l'itération suivante.

En parallèle, à l'issue de l'étape S0735 le TEE calcule un nouveau tag de donnée $tag([gj(x)]_{1,2})$ (étape S0735a). Il transmet alors ce tag $tag([gj(x)]_{1,2})$ au serveur comme donnée d'entrée pour l'exécution de l'étape S0736a pour la boucle $j+1$.

A l'étape S0736a (dans la boucle d'indice $j+1$), le serveur calcule le tag de donnée pour la donnée démasquée (dont le deuxième chiffrement a été retiré en appliquant la fonction $Dec_M2$) à partir du tag de donnée reçu $tag([g_j(x)]_{1,2}$.

L'indice courant de la boucle de calcul passe alors à $j+1$.

La boucle de calcul d'indice $j+1$ commence alors par l'exécution en parallèle des étapes S0730 et S0730a, sur la base respectivement de la donnée $[g_j(x)]_1$ et du tag de donnée $tag([g_j(x)]_1)$.

Lors de la boucle d'indice i=N

Si l'indice j est égal à N, à la fin de l'étape S0732a, le serveur transmet au client CL1 la donnée $[g_N(x)]_{12}$, c'est-à-dire $[F(x)]_{12}$.

En parallèle, une fois l'étape S0732a réalisée, lors d'une étape S0735b, à partir de la donnée $[g_N(x)]_{1,2}$ obtenue et vérifiée à l'étape S0732a, le TEE calcule une signature $sig([g_N(x)]_{1,2})$ de la donnée obtenue, et la transmet au client CL1 (éventuellement, par l'intermédiaire du serveur). Cette signature est calculée de manière à permettre de prouver que la donnée chiffrée renvoyée est bien la donnée chiffrée obtenue, une fois toutes les opérations élémentaires constitutives de F effectuées.

Cette signature ainsi que la donnée $[g_N(x)]_{1,2}$ sont donc transmises au client CL1, éventuellement par l'intermédiaire du serveur.

Le client CL1 réalise alors l'étape S4 (S0704), qui comporte trois sous-étapes S0741, S0742 et S0743.

A l'étape S0741, le client CL1 vérifie que à l'aide de la signature $sig([g_N(x)]_{1,2})$ que la donnée chiffrée renvoyée $[g_N(x)]_{1,2}$ est bien la donnée chiffrée attendue à l'issue des calculs. Si le résultat de la vérification est positif, le calcul se poursuit à l'étape S0742 ; sinon, il s'interrompt et un message d'alerte est transmis.

A l'étape S0742, le client CL1 supprime le deuxième chiffrement de la donnée et obtient la donnée $[g_N(x)]_1$.

A l'étape S0743, le client CL1 déchiffre la donnée reçue $[F(x)]_1$, c'est-à-dire retire de celle-ci le premier chiffrement, et obtient ainsi le résultat $F(x) = g_N(x)$.

Dans ce mode de mise en oeuvre, le TEE réalise uniquement des fonctions support. En effet les fonctions de calcul de tag et de vérification appliquées lors des étapes S0732a et S0735a sont des fonctions qui servent à vérifier les calculs homomorphes réalisés par le serveur ; les fonctions de déchiffrement/chiffrement réalisées aux étapes S0733 et S0735 sont des fonctions qui contribuent à l'exécution des calculs homomorphes par le serveur ; et la fonction de calcul de signature réalisée à l'étape S0735b est une fonction qui sert à préparer une donnée de vérification servant à vérifier les résultats envoyés au client CL1.

9ème mode de mise en oeuvre

Un 9ème mode de mise en oeuvre concerne le cas où l'on veut réaliser le calcul de manière à sécuriser le calcul vis-à-vis d'une attaque CCA (de l'Anglais 'Chosen Ciphertext Attack').

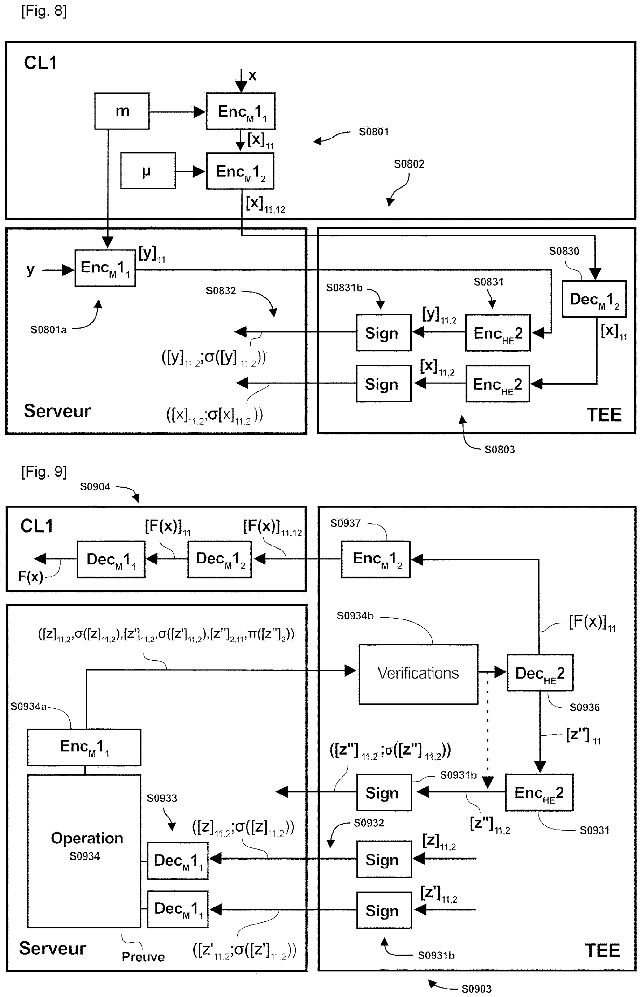

Dans ce but, le procédé est mis en oeuvre en deux phases illustrées respectivement par les Figs.7 et 8.

Un 10ème mode de mise en oeuvre sera présenté ensuite, qui permet de sécuriser le traitement de la même manière, mais cette fois en faisant appel au cryptosystème de Paillier.

Pour le 9ème mode de mise en oeuvre tout d'abord, la Fig.8 montre la préparation de données d'entrée en vue du traitement de données et la Fig.9 montre les principales étapes du traitement de données.

La phase de préparation comporte les étapes suivantes :

A l'étape S1 (S0801), le client (client émetteur) CL1 fournit une donnée x devant servir de donnée d'entrée pour le calcul.

Il lui applique un premier chiffrement $Enc_M1_1$, par masquage, en l'occurrence en lui ajoutant un premier masque m1.

Il lui applique ensuite un chiffrement additionnel $Enc_M1_2$, également par masquage, en lui ajoutant un second masque m2. Ce chiffrement additionnel $Enc_M1_2$ n'est ni un premier ni un deuxième chiffrement au sens de la présente divulgation. Comme dans le 5ème mode de mise en oeuvre, ce chiffrement $Enc_M1_2$ est un chiffrement additionnel utilisé pour garantir la confidentialité de la donnée transmise vis-à-vis du serveur. Dans ce mode de mise en oeuvre, la donnée chiffrée obtenue à l'issue des deux étapes de chiffrement est transmise par le client au TEE (en tant que premier calculateur) via le serveur, ce qui justifie la nécessité de ce chiffrement $Enc_M1_2$ non déchiffrable par le serveur (le chiffrement $Enc_M1_1$ étant quant à lui non déchiffrable par le TEE).

A l'étape S2 (S0802), le client CL1 transmet la donnée $[x]_{11,12}$ sous double chiffrement au premier calculateur, le TEE (Le TEE est bien le premier calculateur car il est le calculateur qui va chiffrer la donnée sous un deuxième chiffrement à l'étape S31, le serveur inversement à l'étape S2 ne faisant que transmettre au TEE la donnée reçue du client).

Ensuite à l'étape S3 (S0803), à partir de la donnée reçue à l'étape S2, le serveur et le TEE calculent un chiffré $[F(x)]$ du résultat du calcul, et transmettent ce résultat au client récepteur qui est le client CL1.

A l'étape S4 (S0904) le client CL1 déchiffre le chiffré du résultat $[F(x)]$ du calcul et obtient le résultat cherché $F(x)$.

L'étape S3, représentée principalement sur la Fig.9, se déroule de manière itérative et est représentée par les Figs.8 et 9.

La fonction F, dans ce mode de mise en oeuvre, comporte un certain nombre de données d'entrée. Dans l'exemple présenté, on n'a représenté sur la Fig.8 que la fourniture de deux données d'entrée x et y au processus de calcul, mais de manière générale, un nombre quelconque de données d'entrée peut être fourni au processus de calcul, éventuellement par une pluralité de clients émetteurs, notamment lors de boucles de calcul successives faisant partie du traitement de données.

Comme cela a été indiqué, la Fig.8 représente la préparation de données d'entrée x et y pour le traitement de données. La donnée x est une donnée fournie par un client émetteur CL1. La donnée y est une donnée fournie par le serveur (qui peut la détenir de toute source ou la calculer par tout moyen).

Avant d'être transmise au TEE, la donnée y est préalablement chiffrée sous le premier chiffrement $Enc1_1$ par le serveur à l'étape S0801a.

Les données $[x]_{11,12}$ et $[y]_{11}$ sont transmises au TEE, respectivement par le client CL1 et le serveur.

A réception de la donnée $[x]_{11,12}$, le TEE retire le chiffrement additionnel (applique $Dec1_2$), c'est-à-dire lui soustrait le masque m2 (étape S0830).

A l'étape S31 (S0831), en parallèle, le deuxième chiffrement $Enc_{HE}2$, un chiffrement complètement homomorphe, est appliqué aux données $[x]_{11}$ et $[y]_{11}$.

Les données sous double chiffrement obtenues $[x]_{11,2}$ et $[y]_{11,2}$ sont alors signées (étape S0831b).

Les données sous double chiffrement $[x]_{11,2}$ et $[y]_{11,2}$ et leurs signatures $\sigma([x]_{11,2})$ et $\sigma([y]_{11,2})$ sont transmises respectivement au TEE à l'étape S32 (S0832).

Ces données servent de données d'entrées aux opérations élémentaires réalisées en boucle, lors d'itérations successives, par le serveur conjointement avec le TEE, comme représenté sur la Fig.9.

Sur la Fig.9, on a représenté la fourniture en entrée cette fois de deux données d'entrées $[z]_{11,2}$ et $[z']_{11,2}$. Ces données peuvent être des données produites lors de l'étape S31 (S0831) illustrée sur la Fig.8, que ce soient des données x fournies par un client émetteur, et/ou des données y fournies par le serveur. Comme cela va être expliqué ce peuvent aussi être des données telles que la donnée $[z'']_{11,2}$ calculée lors de l'étape S31 (S0831) représentée sur la Fig.8 du processus de traitement de données lui-même.

On considère donc le cas où deux données d'entrées $[z]_{11,2}$ et $[z']_{11,2}$, chacune sous double chiffrement $Enc_M1_1$ et $Enc_{HE}2$, sont fournies en entrée au TEE. Le premier chiffrement est un chiffrement par masquage : la donnée z est chiffrée avec le masque m et la donnée z' avec le masque m'.

Le TEE calcule des signatures $\sigma([z]_{11,2})$ et $\sigma([z']_{11,2})$ pour ces données (étape S0931b). Chacune de ces données conjointement avec sa signature est alors transmise au serveur à l'étape S32 (S0932).

A l'étape S33 (S0933), le serveur supprime le premier chiffrement de ces données et de leurs signatures associées en leur appliquant $Dec_M1_1$.

Il réalise alors une opération élémentaire de calcul (opération S34). Cette opération peut par exemple être la multiplication des deux données z et z', c'est-à-dire le calcul d'une nouvelle donnée $[z'']_2 = [z]_2 * [z']_2$. Cette multiplication est réalisée entre chiffrés homomorphes.

En utilisant toute méthode de preuve d'intégrité de calcul connue, une preuve $\pi([z'']_2)$ de l'intégrité de l'opération élémentaire de calcul effectuée à l'étape S34 est alors calculée.

Cette preuve confirme qu'il existe des masques (m,m',m''), appliqués aux données (z,z',z''), tels que

$$[z-m]_2 \ * \ [z'-m']_2 \ = \ [z''-m'']_2$$

où * représente l'opération de multiplication entre chiffrés homomorphes sous chiffrement Enc2.

La donnée chiffrée $[z'']$ obtenue est alors chiffrée à nouveau sous le chiffrement $EncM1_1$ (étape S0934a) : un masque m'' lui est ajouté.

A l'issue de l'opération de chiffrement effectuée à l'étape S34a, les éléments suivants sont transmis au TEE en vue d'une opération de vérification S0934b : Les données d'entrée de l'opération S34 et leurs signatures, c'est-à-dire $[z]_{11,2}$, $[z']_{11,2}$, $\sigma([z]_{11,2})$, $\sigma([z']_{11,2})$ ; et les données obtenues en sortie : $[z'']_{2,11}$, $\pi([z'']_2)$.

A réception de ces éléments, à l'étape S0934b le TEE procède aux vérifications suivantes : il vérifie l'authenticité de la première donnée $[z]_{11,2}$ par rapport à sa signature $\sigma([z]_{11,2})$, l'authenticité de la deuxième donnée $[z']_{11,2}$ par rapport à sa signature $\sigma([z']_{11,2})$, puis vérifie l'authenticité de la donnée obtenue en sortie $[z'']_2$ vis-à-vis de la preuve du résultat, $\pi([z'']_2)$. (D'autres vérifications peuvent être effectuées en fonction des contraintes de sécurité que doit respecter le procédé de traitement de données).

Si le résultat de ces trois vérifications est positif, le TEE enlève le deuxième chiffrement de la donnée $[z"]_{11,2}$ ($Dec_{HE}2$, opération S0936).

Le traitement appliqué ensuite dépend du fait que les opérations élémentaires soient terminées ou non :

Dans le premier cas, c'est-à-dire si l'indice j est strictement inférieur à N, l'ensemble des opérations élémentaires (fonction gj) n'a pas été complètement effectué. La donnée $[z"]11$ sous premier chiffrement est à nouveau chiffrée sous deuxième chiffrement EncHE2, le chiffrement homomorphe, pour permettre la continuation du traitement de données (étape S0931).

Après avoir appliqué à nouveau le deuxième chiffrement $Enc_{HE}2$ à l'étape S0931, le TEE signe le résultat $[z"]_{11,2}$ (opération S0931b) et transmet au serveur pour la suite des calculs la donnée $[z"]_{11,2}$ sous double chiffrement et sa signature.

Inversement si l'indice j est égal à N, la donnée $[z"]11$ sous premier chiffrement est le résultat $[F(x)]11$ du calcul, chiffré sous premier chiffrement. Ce résultat est rechiffré sous le chiffrement additionnel $Enc_M1_2$ (étape S0937), puis est transmis sous double chiffrement au client. L'application du chiffrement additionnel $Enc_M1_2$ garantit que le résultat transmis au client ne puisse pas être compris par le serveur. Ce résultat peut donc éventuellement être transmis par l'intermédiaire du serveur.

Lors des différentes boucles, grâce aux opérations successives des fonctions support $Dec_{HE}2$ et $Enc_{HE}2$ de suppression et de mise en place du deuxième chiffrement, homomorphe (opérations S0936 et S0931), le niveau de bruit est réduit dans le résultat chiffré $[z"]_{11,2}$ finalement retransmis au serveur, ce qui permet la poursuite des itérations de calcul.

Dans le deuxième cas ci-dessus (j=N), à réception du résultat $[F(x)]_{11,12}$ sous double chiffrement, le client retire le chiffrement additionnel ($Dec1_2$) et le premier chiffrement ($Dec1_1$) et obtient ainsi le résultat F(x) à l'étape S4 (S0904). Comme le deuxième chiffrement, c'est-à-dire le chiffrement homomorphe, a été retiré par le TEE, cela évite au client de le faire : le client n'a qu'à réaliser des opérations, bien plus simples, de suppression de masques ($Dec 1_1$ et $Dec 1_2$).

Note : Dans un autre mode de mise en oeuvre plus simple, à l'issue des vérifications, le TEE n'enlève pas le deuxième chiffrement (ne réalise pas l'opération $Dec_{HE}2$) : A l'issue des vérifications effectuées à l'étape S34b (ou même sans réaliser ces vérifications), le TEE calcule une signature du résultat $\sigma([z"]_2)$ (étape S0931b) puis renvoie le résultat $[z"]_2$ et sa signature $\sigma([z"]_2)$ au serveur. Cela revient à bipasser les étapes S0936 et S0931 : ce procédé est illustré par la flèche en pointillés sur la partie droite de la Fig.9.

Avantageusement, dans ce mode de mise en oeuvre, les données échangées entre le client et le serveur ne sont pas chiffrées en homomorphe.

Les vérifications ne portent que sur des opérations élémentaires, le plus souvent simples (par exemple : une multiplication). Par conséquent, le deuxième chiffrement peut ne pas être complètement homomorphe (dans le sens où l'on appellerait chiffrement complètement homomorphe un chiffrement permettant de faire un nombre arbitraire d'additions et de multiplications successives i.e. profondeur multiplicative arbitraire). Ainsi par exemple, un deuxième chiffrement qui est un chiffrement homomorphe de profondeur 1 (ou d'une profondeur finie quelconque) peut être utilisé dans ce mode de mise en oeuvre.

Dans ce mode de mise en oeuvre, les vérifications effectuées permettent de prouver, de proche en proche, que tous les chiffrés manipulés lors des opérations de calcul sont soit calculés par le TEE (qui, en tant que détenteur de la clé secrète de deuxième chiffrement, n'est pas un attaquant pour le deuxième chiffrement), soit calculés lors d'opérations de calcul homomorphes légitimes effectuées sur des chiffrés calculés par le TEE (dans le rectangle 'Preuve' en pointillés sur la Fig.8). Il n'y a donc pas d'adversaire CCA possible sur la couche FHE, car un adversaire (ici, éventuellement, le serveur) n'est pas en capacité de générer des chiffrés homomorphes qui ne seraient pas dûment produits par la fonction de chiffrement ou dérivés de tels chiffrés par des opérations homomorphes légitimes.

## 10ème mode de mise en oeuvre

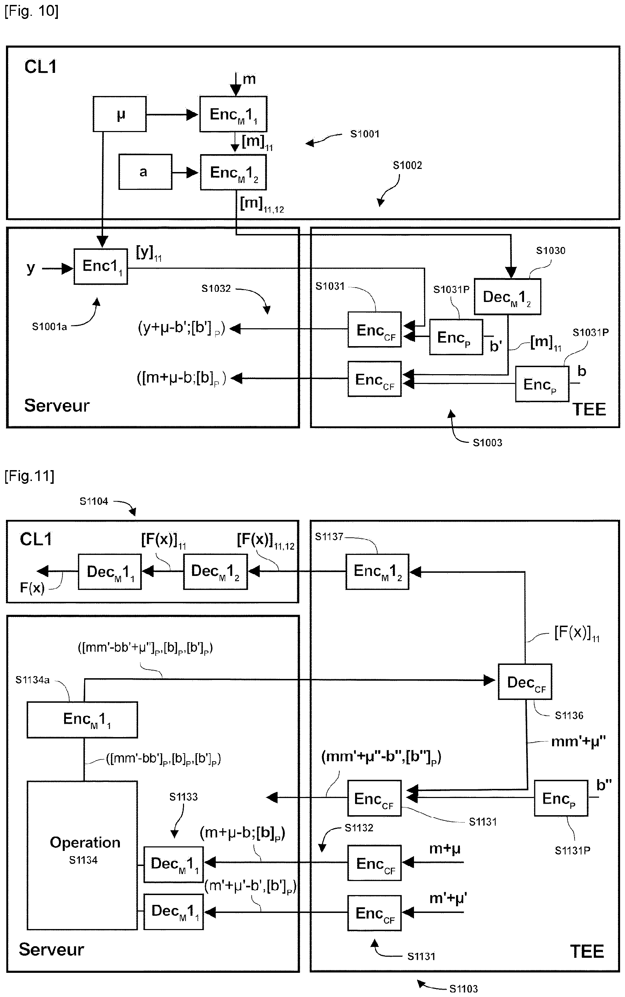

Le 10ème mode de mise en oeuvre va maintenant être présenté en relation avec les Figs.10 et 11. Dans ce mode de mise en oeuvre, le schéma de Paillier est utilisé pour réaliser les opérations élémentaires de multiplication entre chiffrés sous deuxième chiffrement à l'étape S34 ; il ne peut cependant être mis en oeuvre que pour des calculs de profondeur multiplicative 1.

Avantageusement, comme le schéma de Paillier apporte de manière intrinsèque une sécurité contre les attaques CCA, il n'est plus nécessaire dans ce mode de mise en oeuvre d'avoir recours à des opérations de signature et de vérifications de signatures comme dans le mode de mise en oeuvre présenté par les Figs.8 et 9.

Ce 10ème mode de mise en oeuvre est fondé sur la méthode de multiplication de chiffrés de Paillier décrite dans le document Ref.3. et rappelée brièvement ci-dessous :

On considère que l'on dispose d'un masque b préalablement généré aléatoirement dans $Z_N$.

On considère une donnée initiale (ou message) m. A partir de cette donnée m et du masque b, on définit un chiffré CF, en référence aux auteurs MM. Catalano et Fiore de la Ref.3, noté $[m,b]_{CF}$, de la manière suivante :

$$[m,b]_{CF} = (m-b \;;EncP(b)) = (m-b \;; [b]_P) =(c0,c1)$$

où EncP, noté également $[.]_P$, désigne la fonction de chiffrement de Paillier.

Considérons maintenant deux chiffrés CF, à savoir la paire $[m,b]_{CF}$ = (m-b ;EncP(b)), notée également (c0,c1), et la paire $[m',b']_{CF}$ = (m'-b' ;EncP(b')), notée également (c'0,c'1).

On définit les variables intermédiaires a1, a2 et a3 par les équations :

$$a1 = EncP(c0 \times c'0 \bmod n) \;;\; a2 = c1^{c'0} \bmod n^2 \;;\; a3 = c'1^{c0} \bmod n^2.$$

A partir de ces variables a1, a2 et a3, le produit des deux chiffrés CF est alors défini par le triplet $(a1a2a3 \bmod n^2$ ; c1 ; c'1) = (c"0 ; c"1 ; c"2).

On vérifie aisément que c"0 est bien égal au chiffré sous chiffrement de Paillier du produit mm'-bb'. Le produit des deux chiffrés CF vaut donc :

$$(m-b \;; EncP(b)) * (m'-b' \;; EncP(b')) = (EncP(mm'-bb'),EncP(b),EncP(b')).$$

Cette opération permet donc de réaliser une forme de multiplication des deux chiffrés CF initiaux, sur la base du cryptosystème homomorphe additif de Paillier.

Cependant, le résultat obtenu par cette multiplication est un triplet : le triplet $(c"_0,c"_1,c"_2)$, et non un chiffré CF (une paire), comme les données initiales. Les opérations de multiplication ne peuvent donc pas se succéder directement car une opération de multiplication attend en entrée des chiffrés CF et non des triplets.

Le procédé de calcul selon la présente divulgation va permettre de surmonter cette difficulté en déléguant au TEE la reconversion des triplets en chiffrés CF. Cette opération est une fonction support, puisqu'elle contribue à la réalisation des calculs sous chiffrement homomorphe par le serveur.

La Fig.10 présente la préparation de données fournies en entrée pour le calcul, dans un scénario dans lequel une donnée m est fournie en entrée par un client CL1, et une donnée y est fournie en entrée par le serveur.

Lors de l'étape S1 (S1001), la donnée m subit deux opérations successives de chiffrement par masquage : un premier masquage $Enc_M1_1$, durant laquelle un masque $\mu$ est appliqué à la donnée x ; suivi par un masquage additionnel $Enc_M1_2$ (chiffrement additionnel) durant lequel un masque a est appliqué à la donnée x+$\mu$: on obtient $[m]_{11,12}$ = m+$\mu$+a.

Lors de l'étape S2 (S1002), la donnée chiffrée m+$\mu$+a est transmise au TEE.

A une étape S1030, le TEE retire le masque a (le chiffrement additionnel) et obtient la donnée sous premier chiffrement m+$\mu$.

En parallèle, le TEE génère un masque b, et calcule un chiffré de Paillier $[b]_P$ de ce masque (étape S1031P).

Ces deux derniers éléments, ainsi que la donnée sous premier chiffrement x+$\mu$ sont alors combinés pour former un chiffré CF (m+$\mu$-b ;$[b]_P$) à l'étape S31 (S1031).

Par ailleurs, le serveur fournit une donnée d'entrée y pour le calcul. Il la masque en lui ajoutant un masque $\mu'$ et obtient un chiffré sous premier chiffrement Enc11 : $[y]_{11}$ = y+$\mu'$ (étape S1001a).

En parallèle, le TEE génère un masque b', et calcule un chiffré de Paillier $[b']_P$ de ce masque (étape S1031P également).

Ces deux derniers éléments, ainsi que la donnée sous premier chiffrement y+$\mu$ sont alors combinés pour former un chiffré CF (y+$\mu'$-b' ;$[b']_P$) à l'étape S31 (S1031).

Dans cet exemple, les deux chiffrés CF (x+$\mu$-b ;$[b]_P$) et (y+$\mu'$-b' ;$[b']_p$) sont calculés et transmis au serveur à l'étape S32 (S1032) pour la réalisation d'opérations de calcul élémentaires.

Lors de la mise en oeuvre du procédé de calcul selon la présente divulgation, ces opérations sont réalisées de la manière suivante.

On considère que les opérations élémentaires que doit réaliser le serveur sont soit des additions, soit des multiplications. Ces deux cas sont traités différemment.

D'une part, en ce qui concerne les additions, le serveur peut réaliser de manière successive un nombre quelconque d'opérations d'addition (puisque l'opération d'addition ne présente pas l'inconvénient indiqué précédemment, de fournir en sortie un triplet et non un chiffré CF ; pour plus de détails sur cette opération, se référer au document Ref.3).

Inversement, les opérations de multiplication sont réalisées de la manière suivante, illustrée par la Fig.11.

Pour réaliser une opération de multiplication entre deux données m et m', on suppose que le TEE dispose de deux chiffrés de ces données, sous premier chiffrement Enc11 :

$$[m]_{11} = m+\mu \text{ et } [m']_{11} = m'+\mu'.$$

Ces chiffrés peuvent être par exemple des données fournies par des clients tels que la donnée m+μ de la Fig. 10, ou des données fournies par le serveur telles que la donnée y+μ' de la Fig.10, ou encore des données produites par le calcul au sein du TEE à partir de données fournies par le serveur, comme la donnée mm'+μ'' qui va être présentée plus loin.

Le TEE fournit deux masques b et b', et les chiffrés de Paillier $[b]_P$ et $[b']_P$ de ces masques (étape S1031P ou S1131P).

Le TEE calcule alors les chiffrés CF des deux chiffrés à multiplier (étape S1031 ou S1131, qui représentent la même étape). Ces chiffrés CF se présentent donc sous la forme de deux paires (m+μ-b ;$[b]_P$) et (m'+μ'-b' ;$[b']_P$). Ici les masques μ et μ' sont connus du serveur mais indéchiffrables par le TEE. Le chiffrement CF, qui constitue le deuxième chiffrement, est indéchiffrable par le serveur.

Le TEE transmet les chiffrés CF au serveur (étape S1032 ou S1132).

Le serveur retire le premier chiffrement $Enc1_1$ en soustrayant le premier masque μ, μ' de chacun des chiffrés à l'étape S33 (S1133).

Le serveur réalise alors l'opération de multiplication entre chiffrés CF décrite par l'algorithme proposé par le document Ref.3 (étape S1134). A l'issue de cette opération, le serveur obtient le triplet ($[mm'-bb']_P$ ;$[b]_P$ ;$[b']_P$).

Le serveur chiffre alors le triplet en ajoutant un masque μ'' au $1^{er}$ terme du triplet grâce à la propriété d'homomorphisme additif du schéma de chiffrement de Paillier (étape S1134a). Il envoie ensuite le résultat obtenu (mm'-bb'+μ'' ;$[b]_P$ ;$[b']_P$) au TEE.

Le TEE retire le chiffrement des trois chiffrés sous chiffrement de Paillier (étape S1136). Il obtient (mm'-bb'+μ'',b,b') et peut ainsi calculer :

$$mm'-bb'+\mu''+b*b' = mm'+\mu''$$

Le produit mm' de la multiplication reste ainsi sous premier chiffrement, de telle sorte que le TEE ne connait pas la valeur de ce produit.

Comme dans le cas général du $9^{ème}$ mode de mise en oeuvre, le traitement effectué par le TEE n'est pas le même si toutes les opérations élémentaires ont été réalisées et la boucle en cours est la dernière boucle d'indice j=N, ou non, auquel cas il reste encore au moins une boucle de calcul (j < N).

Dans le premier cas, c'est-à-dire si j=N, le résultat obtenu à l'issue de l'étape S1136 est aussi le résultat du calcul, sous premier chiffrement :

$$mm'+\mu'' = F(x)+\mu'' = [F(x)]_{11}.$$

Dans ce cas, ce résultat chiffré est soumis aux opérations des étapes S1137 et S4 comme dans le cas général du $9^{ème}$ mode de mise en oeuvre (Fig.9) : A l'étape S1137, le TEE lui applique un chiffrement additionnel $Enc1_2$ et transmet le résultat obtenu au client CL1.

A l'étape S4, le client CL1 retire successivement le chiffrement additionnel (applique la fonction $Dec_M1_2$), puis retire le premier chiffrement (applique la fonction $Dec_M1_1$), ce qui permet d'obtenir le résultat souhaité F(x).

Inversement s'il reste une ou plusieurs opérations élémentaires à effectuer (j<N), le TEE génère un nouveau masque b'', et calcule un chiffré de Paillier $[b'']_P$ de ce masque (étape S1131P). Le masque b'' et son chiffré $[b'']_P$ sont ensuite combinés avec le chiffré mm'+μ'' de manière à obtenir un chiffré CF (étape S31). La paire (mm''+μ''-b'' ; $[b'']_P$) est alors retransmise au serveur : les calculs peuvent alors se poursuivre pour l'itération suivante sur la base de cette nouvelle paire en entrée et d'une autre valeur avec laquelle elle doit être multipliée, et ainsi de suite.

Ce $10^{ème}$ mode de mise en oeuvre présente l'intérêt, par rapport au $9^{ème}$ mode de mise en oeuvre, qu'il ne nécessite pas les opérations de signatures prévues dans ce dernier cas.

Références

Ref.1 - L. Coppolino, S. D'Antonio, V. Formicola, G. Mazzeo and L. Romano, "VISE: Combining Intel SGX and Homomorphic Encryption for Cloud Industrial Control Systems" in IEEE Transactions on Computers, vol. 70, no. 5, pp. 711-724, 1 May 2021, doi: 10.1109/TC.2020.2995638.

Ref.2 - Wang, W., Jiang, Y., Shen, Q., Huang, W., Chen, H., Wang, S., ... & Lin, D. (2019). Toward scalable fully homomorphic encryption through light trusted computing assistance. arXiv preprint arXiv:1905.07766.

Ref.3 - D.Catalano, D.Fiore, " Boosting Linearly-Homomorphic Encryption to Evaluate Degree-2 Functions on Encrypted Data", Cryptology ePrint Archive, Paper 2014/813.

Ref.4 - D.Natarajan, A.Loveless, W.Dai, R.Dreslinski, "Chex-Mix: Combining homomorphic Encryption with Trusted Execution Environments for Two-party Oblivious Inference in the Cloud', IACR, International Association for Cryptographie Research, vol.20220908:153418.

Ref.5 - D.Fiore, R.Gennaro, V.Pastro, "Efficiently Verifiable Computation on Encrypted Data", Cryptology ePrint Archive, Paper 2014/202.

**Revendications**

1. Procédé de traitement de données dans un système comprenant deux calculateurs pour obtenir un résultat à partir d'au moins une donnée d'entrée (x) à fournir par au moins un client émetteur (CL1,CL2), le résultat s'obtenant en appliquant une combinaison d'opérations élémentaires $(f,g,h ;g_j)$ à au moins une donnée d'entrée (x) ; dans lequel

   l'un des calculateurs est un serveur, et l'autre est un environnement d'exécution sécurisé, TEE ;
   un premier chiffrement [Enc1,Dec1] et un deuxième chiffrement [Enc2,Dec2] sont définis, l'un étant indéchiffrable par le serveur, et l'autre étant indéchiffrable par le TEE;
   le procédé comporte les étapes suivantes :

   S1) au moins un client émetteur (CL1) fournit une donnée d'entrée (x) et lui applique le premier chiffrement (Enc1) ;
   S2) ledit au moins un client émetteur (CL1) transmet la donnée d'entrée $([x]_1 ;[x]_{1,2})$ sous le premier chiffrement (Enc1) à un des calculateurs ;
   S3) au cours d'un traitement de données, les deux calculateurs appliquent la combinaison d'opérations élémentaires à ladite donnée chiffrée reçue à l'étape S2 de manière à obtenir un chiffré ([F(x)]) du résultat, et transmettent ce résultat à au moins un client récepteur (CL1,CL2), l'étape S3 comportant les étapes élémentaires suivantes :

   S31) le premier calculateur chiffre la donnée traitée sous deuxième chiffrement (Enc2) ;
   S32) le premier calculateur transmet au deuxième calculateur la donnée traitée $([x]_{1,2})$ obtenue, chiffrée sous premier et deuxième chiffrement ; et
   S33) le deuxième calculateur supprime le premier chiffrement (Dec1) de la donnée traitée reçue ;

   S4) ledit au moins un client récepteur déchiffre le chiffré du résultat ([F(x)]) et obtient le résultat (F(x)) ;
   pendant le traitement de données effectué à l'étape S3, le serveur ne traite de donnée traitée que sous au moins le chiffrement indéchiffrable par le serveur, et le TEE ne traite de donnée traitée que sous au moins le chiffrement indéchiffrable par le TEE, qui peut être notamment un chiffrement par masquage ; et
   le premier et le deuxième chiffrement vérifient la propriété, pour toute donnée traitée x :

$$Dec2(Dec1(Enc2(Enc1(x)))) = Dec2(Enc2(x)).$$

2. Procédé de traitement de données selon la revendication 1, dans lequel ledit chiffrement indéchiffrable par le serveur est ou comprend un chiffrement homomorphe, notamment totalement homomorphe.

3. Procédé de traitement de données selon la revendication 2, dans lequel à l'étape S3, le TEE applique à la donnée traitée ou aux données traitées uniquement une ou plusieurs fonctions support ;
   une fonction support étant une fonction autre que lesdites opérations élémentaires et qui :

   - contribue à l'exécution de calculs homomorphes par le serveur ou à la vérification de ceux-ci ;
   - sert à chiffrer ou déchiffrer des données à traiter reçues du client, des données traitées, ou des résultats envoyés au client ; et/ou
   - sert à préparer des données servant à vérifier des données à traiter reçues du client, des données traitées, et/ou des résultats envoyés au client.

4. Procédé de traitement de données selon l'une quelconque des revendications 1 à 3, comportant les étapes suivantes :

   S0235) le deuxième calculateur applique le premier chiffrement $(Enc_{HE}1)$ à la donnée déchiffrée au cours de l'étape S33, et transmet la donnée obtenue au premier calculateur ; et

S0236) le premier calculateur supprime le deuxième chiffrement ($Dec_M2$) de la donnée traitée reçue à l'issue de l'étape S0235.

5. Procédé de traitement de données selon la revendication 4, dans lequel l'étape S0235 est effectuée immédiatement à l'issue de l'étape S33, de telle sorte que durant l'étape S0235, le deuxième calculateur applique le premier chiffrement ($Enc_{HE}1$) à la donnée traitée obtenue en sortie de l'étape S33.

6. Procédé de traitement de données selon l'une quelconque des revendications 1 à 5, dans lequel au cours de l'étape S3, la donnée traitée est chiffrée sous un chiffrement ($Enc1_2$) autre que le premier chiffrement ou est chiffrée avec le premier chiffrement mais avec une autre clé de chiffrement ; et le résultat chiffré retourné à l'issue de l'étape S3 est chiffré avec un chiffrement différent du premier chiffrement ou est chiffré avec le premier chiffrement mais avec une autre clé de chiffrement.

7. Procédé de traitement de données selon l'une quelconque des revendications 1 à 6, dans lequel un client récepteur (CL1,CL2) recevant le résultat chiffré à l'issue de l'étape S3, est identique ou différent du ou de chaque dudit au moins un client émetteur (CL1) fournissant la donnée (x) à l'étape S1.

8. Procédé de traitement de données selon l'une quelconque des revendications 1 à 7, comportant en outre une étape S0411 précédant l'étape S2 et durant laquelle le premier client (CL1) applique un chiffrement additionnel (EncS), notamment symétrique, à la donnée (x) ; et après que la donnée ($[x]_{1,S}$) a été transmise au premier calculateur à l'étape S2, le premier calculateur retire le chiffrement additionnel (S0430).

9. Procédé de traitement de données selon l'une quelconque des revendications 1 à 8, dans lequel

   - lors d'une opération S0533, le TEE retire le premier chiffrement ($Dec_M1_1$), dit premier chiffrement initial, qui peut être notamment un chiffrement par masquage, de la donnée traitée ; et
   - lors d'une opération S0535, le TEE applique à la donnée traitée un chiffrement homomorphe ($Enc_{HE}1_2$), en tant que premier chiffrement final ;
   - lors d'une opération S0535a, à la suite de l'étape S0535, la donnée traitée sous premier chiffrement final ($Enc_M1_1$) et sous deuxième chiffrement ($Enc_{HE}1_2$) est transmise au serveur ;

   lorsque l'ensemble des opérations élémentaires ont été effectuées, le chiffré du résultat est transmis au client sous premier chiffrement final ($Enc_{HE}1_2$) ; et à l'étape S4, le client retire le premier chiffrement final ($Dec_{HE}1_2$).

10. Procédé de traitement de données selon l'une quelconque des revendications 1 à 8, dans lequel

    le premier chiffrement appliqué à l'étape S1 est le chiffrement homomorphe ($Enc_{HE}1_1$), dit premier chiffrement homomorphe ;
    lors d'une étape S0633, le TEE retire le premier chiffrement homomorphe ($Dec_{HE}1_1$) de la donnée traitée ;
    lors d'une étape S0635 effectuée après l'étape S0633, le TEE applique à la donnée un deuxième chiffrement homomorphe ($Enc1_2$) autre que le premier chiffrement homomorphe ; et
    à l'étape S4, le client retire du résultat chiffré le deuxième chiffrement homomorphe.

11. Procédé de traitement de données selon l'une quelconque des revendications 1 à 10, dans lequel

    la combinaison d'opérations élémentaires comporte N opérations élémentaires d'ordre j, j=1 ... N ;
    l'étape S3 comporte l'exécution d'une pluralité de boucles de calcul, de manière itérative ;
    à chaque boucle d'indice j, j=1.. N, les étapes S1 (0701), S31 (S0731), S32 (S0732) et S33 (S0733), une étape S0730, une étape S0735 et une étape S0736 sont réalisées de la manière suivante :
    au cours de l'étape S1 (S0701), le client fournit une donnée d'entrée d'indice j ($x_j$), et transmet ladite donnée d'entrée d'indice j au premier calculateur, qui est le serveur, comme donnée d'entrée pour l'étape S0730 ;
    au cours de l'étape S0730, le serveur applique l'opération élémentaire ($g_j$) d'indice j à la donnée qui lui est fournie en entrée ;
    le serveur réalise l'étape S31 (S0731) d'application du deuxième chiffrement à la donnée traitée et l'étape S32 de transmission de la donnée traitée chiffrée au TEE ; le TEE réalise l'étape S33 de suppression du premier chiffrement de la donnée traitée, puis à l'étape S0735 applique à nouveau à la donnée le premier chiffrement, puis retransmet la donnée ainsi rechiffrée au serveur ;

à réception de ladite donnée ainsi rechiffrée, le serveur au cours d'une étape S0736a supprime de celle-ci le deuxième chiffrement ; la donnée ainsi modifiée est alors fournie comme donnée d'entrée de l'opération S0730 de la boucle de calcul suivante si celle-ci a lieu.

**12.** Procédé de traitement de données selon la revendication 11, dans lequel un protocole de calcul vérifiable ($\pi$) est défini, qui permet de vérifier le résultat en réalisant une vérification élémentaire pour chacune desdites opérations élémentaires ; le premier calculateur est le serveur, et le deuxième calculateur est le TEE ;

une fonction de calcul de tag ($\pi.tag$) est définie dans le cadre du protocole de calcul vérifiable, cette fonction étant commutative avec les opérations élémentaires gj ;
à l'étape S1 (S0701), le client transmet en outre au serveur un tag ($tag([x]_1$) du chiffré sous premier chiffrement de la donnée ($x$) ;
le deuxième chiffrement est un chiffrement par masque ($m_j$) ;
à chaque boucle d'indice j, j = 1... N :

à une étape S0701a, le client fournit au serveur un masque ($m_j$) et un tag de masque ($tag(m_j$)) du masque ;
au cours d'une étape S0730, le serveur applique l'opération élémentaire ($g_j$) d'indice j au tag de donnée traitée qui lui est fourni en entrée ;
au cours d'une étape S0731, le serveur chiffre sous deuxième chiffrement la donnée traitée (Enc2) ;
au cours d'une étape S0732, le serveur transmet au TEE la donnée traitée ($[x]_{1,2}$) obtenue, chiffrée sous premier et deuxième chiffrement ;
au cours d'une étape S0730a, le serveur applique l'opération élémentaire ($g_j$) d'indice j au tag de donnée qui lui est fourni en entrée ;
au cours d'une étape S0731a, le serveur calcule le tag du chiffré sous double chiffrement ($tag([g_j(x)]_{12})$) à partir du tag ($tag([g_j(x)]_1)$) obtenu à l'étape S0730a, et du tag ($tag(m_j)$) du masque $m_j$, et transmet ce tag au TEE ;
au cours d'une étape S0732a, en fonction de la donnée chiffrée reçue à l'étape S0732, et du tag de donnée chiffrée reçu à l'étape S0731a, le TEE vérifie l'opération élémentaire réalisée à l'étape S0730 en effectuant la vérification élémentaire correspondant à cette opération ;
si le résultat est positif et que l'indice de boucle j vérifie j<N, à l'étape S0733 :

- le TEE retire le premier chiffrement ($Dec_{HE}1$) de la donnée chiffrée reçue à l'étape S0732 effectuée pendant la boucle, puis
- au cours d'une étape S0735, applique le premier chiffrement ($Enc_{HE}1$) à la donnée sous deuxième chiffrement et transmet la donnée chiffrée obtenue au serveur ;
- au cours d'une étape S0736, le serveur retire le deuxième chiffrement ($Dec_M2$) de la donnée reçue à l'issue de l'étape S0735, et fournit la donnée ainsi déchiffrée comme donnée d'entrée pour l'opération S0730 de la boucle de calcul suivante ;
- au cours d'une étape S0735a, le TEE calcule un tag de la donnée chiffrée calculée à l'étape S0735 et transmet ce tag au serveur ; puis
- au cours d'une étape S0736a, le serveur calcule le tag du chiffré démasqué ($tag([g_j(x)]_1)$) à partir du tag reçu à l'issue de l'étape S0735a et du tag du masque, et fournit le tag du chiffré démasqué comme donnée d'entrée pour l'opération S0730a de la boucle de calcul suivante.

**13.** Procédé de traitement de données selon la revendication 11, dans lequel le premier calculateur est le TEE ;
pendant au moins une des boucles de calcul, dite boucle J, d'indice j=J, le procédé est exécuté de la manière suivante :

à l'étape S32 de la boucle J, en plus de la donnée chiffrée sous premier et deuxième chiffrement ($[z]_{11,2}$), le premier calculateur transmet au deuxième calculateur une signature ($\sigma([z]_{11,2})$) de celle-ci, ainsi qu'une autre donnée chiffrée ($[z']_{11,2}$) sous premier et deuxième chiffrement accompagnée d'une signature ($\sigma([z']_{11,2})$) de cette dernière;
à l'étape S33 de la boucle J (S0933), le serveur retire le premier chiffrement de la donnée chiffrée sous double chiffrement et de ladite autre donnée reçues à l'étape S32 ;
à une étape S0934 de la boucle J, le serveur applique l'opération élémentaire d'indice J aux deux données déchiffrées obtenues à l'étape S33 ;
à une étape S0934a de la boucle J, le serveur applique le premier chiffrement ($Enc_M1_1$) à la donnée obtenue ;
le serveur calcule en outre une preuve de calcul prouvant que la donnée chiffrée obtenue à l'issue de l'étape S0934a est bien le résultat de l'application de l'opération élémentaire d'indice J aux deux données utilisées en entrée pour l'étape S0934, et transmet la donnée chiffrée obtenue à l'étape S0934a ainsi que la preuve au TEE ;

au cours d'une étape S0934b, le TEE vérifie au moins si la preuve correspond au résultat du calcul ; et,

si le résultat de la vérification est positif, à une étape S0936 le premier calculateur retire le deuxième chiffrement de la donnée ($Dec_{HE}2$), et fournit la donnée obtenue comme d'entrée pour une étape S31 de la boucle d'indice suivant si celle-ci a lieu ; si le résultat de la vérification est négatif, le TEE interrompt le traitement.

**14.** Procédé de traitement de données selon la revendication 11, dans lequel le premier calculateur est le TEE ;

le deuxième chiffrement étant un chiffrement homomorphe assurant une sécurité contre les attaques CCA, par exemple le chiffrement de Paillier ;

pendant au moins une des boucles de calcul, dite boucle J, d'indice j=J, le procédé est exécuté de la manière suivante :

à l'étape S32 de la boucle J (S1132), en plus de la donnée chiffrée sous premier et deuxième chiffrement ($[z]_{11,2}$), le TEE transmet au serveur une autre donnée chiffrée ($[z']_{11,2}$) sous premier et deuxième chiffrement ;

à l'étape S33 de la boucle J (S1133), le serveur retire le premier chiffrement de la donnée chiffrée sous double chiffrement et de ladite autre donnée reçues à l'étape S32 ;

à une étape S1134 de la boucle J, le serveur applique l'opération élémentaire d'indice J aux deux données déchiffrées obtenues à l'étape S33 ;

à une étape S1134a de la boucle J, le serveur applique le premier chiffrement ($Enc_M1_1$) à la donnée obtenue par application de l'opération élémentaire ($g_J$) d'indice J à l'étape S1134 ;

le serveur transmet la donnée chiffrée obtenue à l'étape S1134a au TEE ; et,

à une étape S1136, le TEE retire le deuxième chiffrement de la donnée ($Dec_{CF}$), et fournit la donnée obtenue comme d'entrée pour une étape S31 de la boucle d'indice suivant si celle-ci doit avoir lieu.

[Fig. 1]

[Fig. 2]

[Fig. 3]

[Fig.4]

[Fig. 5]

[Fig. 6]

[

Fig. 7]

[Fig. 8]

CL1

↓ x

m → $Enc_M1_1$

$[x]_{11}$ ← S0801

μ → $Enc_M1_2$ S0802

$[x]_{11,12}$

Serveur

y → $Enc_M1_1$ $[y]_{11}$

S0801a

S0832

$([y]_{11,2};\sigma([y]_{11,2}))$

$([x]_{11,2};\sigma[x]_{11,2}))$

S0830

$Dec_M1_2$

$[x]_{11}$

S0831b S0831

Sign ← $[y]_{11,2}$ ← $Enc_{HE}2$

Sign ← $[x]_{11,2}$ ← $Enc_{HE}2$

S0803

TEE

[Fig. 9]

S0904

CL1 $[F(x)]_{11}$ $[F(x)]_{11,12}$ S0937

F(x) ← $Dec_M1_1$ ← $Dec_M1_2$ ← $Enc_M1_2$ ←

$[F(x)]_{11}$

$([z]_{11,2},\sigma([z]_{11,2}),[z']_{11,2},\sigma([z']_{11,2}),[z'']_{2,11},\pi([z'']_2))$

S0934b

Verifications → $Dec_{HE}2$

S0934a S0936

$Enc_M1_1$

$[z'']_{11}$

$([z'']_{11,2};\sigma([z'']_{11,2}))$

Operation S0933

S0934 $([z]_{11,2};\sigma([z]_{11,2}))$ Sign ← S0931b ← $Enc_{HE}2$

$Dec_M1_1$ ← S0932 $[z'']_{11,2}$ S0931

Sign ← $[z]_{11,2}$

$Dec_M1_1$ ← Sign ← $[z']_{11,2}$

Serveur Preuve $([z']_{11,2};\sigma([z']_{11,2}))$ S0931b TEE

S0903

[Fig. 10]

[Fig.11]

[Fig. 12]

S1) Le premier client fournit une donnée d'entrée (x)

S2) Le premier client fournit la donnée d'entrée (x) sous premier chiffrement à l'un des calculateurs

S3) les deux calculateurs au cours d'un traitement de données appliquent la combinaison d'opérations élémentaires à la donnée chiffrée reçue à l'étape S2 de manière à obtenir un chiffré ([F(x)]) du résultat du calcul, et transmettent ce résultat au(x) client(s) récepteur(s)

S31) le premier calculateur chiffre la donnée traitée sous deuxième chiffrement Enc2

S32) le premier calculateur transmet au deuxième calculateur la donnée traitée obtenue, chiffrée sous premier et deuxième chiffrement

S33) le deuxième calculateur supprime le premier chiffrement de la donnée traitée reçue

S4) Le client déchiffre la donnée chiffrée [F(x)] et obtient le résultat F(x)

EP 4 576 650 A1

Europäisches
Patentamt

European
Patent Office

Office européen
des brevets

**RAPPORT DE RECHERCHE EUROPEENNE**

Numéro de la demande

EP 24 30 7191

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2019/327077 A1 (MANDAL AVRADIP [US] ET AL) 24 octobre 2019 (2019-10-24) | 1-10 | INV.<br>H04L9/00 |
| A | * abrégé *<br>* alinéas [0001] - [0004] *<br>* alinéas [0014] - [0050] *<br>- - - - - | 11-14 | |
| A | CN 116 506 100 A (BASEBIT SHANGHAI INFORMATION TECH CO LTD ET AL.) 28 juillet 2023 (2023-07-28)<br>* abrégé *<br>* "Background technique" *<br>* "Contents of the invention" *<br>- - - - - | 1-14 | |
| A | CAI YUXUAN ET AL: "SecFed: A Secure and Efficient Federated Learning Based on Multi-Key Homomorphic Encryption", IEEE TRANSACTIONS ON DEPENDABLE AND SECURE COMPUTING, IEEE SERVICE CENTER, NEW YORK, NY, US,<br>vol. 21, no. 4,<br>28 novembre 2023 (2023-11-28), pages 3817-3833, XP011975542,<br>ISSN: 1545-5971, DOI: 10.1109/TDSC.2023.3336977<br>[extrait le 2023-11-29]<br>* abrégé *<br>* Chapter I. "Introduction" *<br>* Chapter II. "Background and related work" *<br>* Chapter III. "Preliminaries and system model" *<br>* Chapter IV. "SecFed framework" *<br>- - - - - | 1-14 | |

DOMAINES TECHNIQUES
RECHERCHES (IPC)

H04L

Le présent rapport a été établi pour toutes les revendications

| Lieu de la recherche | Date d'achèvement de la recherche | Examinateur |
|---|---|---|
| Munich | 27 janvier 2025 | Di Felice, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

32

## ANNEXE AU RAPPORT DE RECHERCHE EUROPEENNE
## RELATIF A LA DEMANDE DE BREVET EUROPEEN NO.

EP 24 30 7191

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-01-2025

| Document brevet cité au rapport de recherche | Date de publication | Membre(s) de la famille de brevet(s) | Date de publication |
|---|---|---|---|
| US 2019327077 A1 | 24-10-2019 | EP       3557814 A1<br>JP  2019191575 A<br>US  2019327077 A1 | 23-10-2019<br>31-10-2019<br>24-10-2019 |
| CN 116506100 A | 28-07-2023 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **L. COPPOLINO** ; **S. D'ANTONIO** ; **V. FORMICOLA** ; **G. MAZZEO** ; **L. ROMANO**. VISE: Combining Intel SGX and Homomorphic Encryption for Cloud Industrial Control Systems. *IEEE Transactions on Computers*, 01 May 2021, vol. 70 (5), 711-724

- **WANG, W.** ; **JIANG, Y** ; **SHEN, Q.** ; **HUANG, W.** ; **CHEN, H.** ; **WANG, S.** ; **LIN, D.** Toward scalable fully homomorphic encryption through light trusted computing assistance.. *arXiv preprint arXiv:1905.07766*, 2019

- **D.CATALANO** ; **D.FIORE**. Boosting Linearly-Homomorphic Encryption to Evaluate Degree-2 Functions on Encrypted Data. *Cryptology ePrint Archive*, 2014, 813

- **D.NATARAJAN** ; **A.LOVELESS** ; **W.DAI** ; **R.DRESLINSKI**. Chex-Mix: Combining homomorphic Encryption with Trusted Execution Environments for Two-party Oblivious Inference in the Cloud. *IACR, International Association for Cryptographie Research*, vol. 20220908, 153418

- **D.FIORE** ; **R.GENNARO** ; **V.PASTRO**. Efficiently Verifiable Computation on Encrypted Data. *Cryptology ePrint Archive*, 2014, 202